# EUROPEAN PATENT SPECIFICATION

(11) **EP 2 924 788 B1**
(45) Date of publication and mention of the grant of the patent: **14.09.2016**
(21) Application number: 15159803.4
(22) Date of filing: 19.03.2015
(51) Int. Cl.: H01M 8/04955, H01M 8/04089, H01M 8/04223, H01M 8/0438, H01M 8/04664, H01M 8/04746, H01M 8/0612, H01M 8/0662

(54) **FUEL CELL SYSTEM**
BRENNSTOFFZELLENSYSTEM
SYSTÈME DE PILE À COMBUSTIBLE

(30) Priority: 25.03.2014 JP 2014061865
(43) Date of publication of application: 30.09.2015
(73) Proprietor: AISIN SEIKI KABUSHIKI KAISHA, Kariya-shi, Aichi 448-8650 (JP)
(72) Inventor: Ohkawara, Hiroki, Kariya-shi, Aichi 448-8650 (JP)
(74) Representative: TBK

(56) References cited:
- EP-A1- 1 935 844
- EP-A1- 2 581 974
- EP-A1- 2 672 558
- EP-A2- 2 487 742
- JP-A- H09 320 622
- JP-A- 2011 034 736
- US-A1- 2008 038 603

## Description

### TECHNICAL FIELD

This disclosure generally relates to a fuel cell system.

### BACKGROUND DISCUSSION

A known fuel cell system is disclosed, for example, in JP 2012 169045 A which will be hereinafter referred to as Reference 1. According to the fuel cell system disclosed in Reference 1, a first desulfurizer, a second desulfurizer both of which desulfurize a source gas, and a flow meter that measures a flow rate of source gas are arranged in the mentioned order from an upstream side at a source gas passage through which the source gas is supplied to a reformer. A desulfurizing agent provided at each of the first and second desulfurizers adsorbs not only sulfur contained in the source gas but also the source gas itself (mainly hydrocarbon such as methane and butane, for example). Because the amount of adsorption of the source gas varies with temperature of the desulfurizing agent, the source gas is adsorbed or desorbed at the desulfurizing agent based on temperature changes thereof. The flow rate of source gas discharged from the first and second desulfurizers relative to the flow rate of source gas supplied to the first and second desulfurizers fluctuates or varies depending on the temperature changes of the desulfurizing agent. As a result, the flow rate of source gas supplied to the reformer may fluctuate or vary. Therefore, in the fuel cell system disclosed in Reference 1, the flow meter is disposed at a downstream side relative to the first and second desulfurizers at the source gas passage. The flow rate of source gas is controlled on a basis of the flow rate obtained at the portion where the flow meter is provided so that the flow rate of source gas supplied to the reformer may be accurately controlled.

Nevertheless, in the fuel cell system disclosed in Reference 1, fuel (source gas) is burnt or combusted so as to increase the temperature of the reformer to an operating temperature thereof in a start-up operation of the fuel cell system. In order to burn the fuel, a certain or appropriate flow rate (flow rate per unit time) is necessarily supplied to a fuel cell. The desulfurizing agent adsorbs not only sulfur but also fuel. Thus, because a portion of fuel supplied from a supply source is adsorbed at the desulfurizing agent, the flow rate of fuel supplied to the fuel cell may be less than the flow rate required to burn the fuel. In addition, the adsorption amount of fuel at the desulfurizing agent differs depending on the temperature thereof and types of fuel, for example. Accordingly, a time period for securing the flow rate of fuel necessary for the start-up operation of the fuel cell system because the adsorption amount of fuel at the desulfurizing agent reaches or exceeds a predetermined amount after the fuel supply is started varies or differs depending on the temperature of desulfurizing agent, types of fuel, or the like. Further, a time period for starting the start-up operation of the fuel cell system is desirably reduced.
Document EP281974 discloses a fuel cell system comprising a fuel cell including a fuel electrode supplied with a fuel to which an odorant is added an adsorption device disposed between the supply source and the fuel electrode and including an adsorption portion which is configured to adsorb the odorant and the fuel

A need thus exists for a fuel cell system which may promptly and stably start a start-up operation of the fuel cell system regardless of a temperature of an adsorption portion or types of fuel, for example.

### SUMMARY

This object is achieved by a fuel cell system having the features of claim 1. Advantageous further developments of the invention are set out in the dependent claims.

According to the invention, the control unit supplies the fuel before the start of the start-up operation of the fuel cell system and determines whether or not the adsorption state of fuel at the adsorption portion is in the predetermined state by the adsorption state determination portion. At this time, the adsorption state of fuel at the adsorption portion is represented by an adsorption amount of fuel at the adsorption portion. In a case where the adsorption state of fuel is in the predetermined state, the adsorption amount of fuel at the adsorption portion is equal to or greater than a predetermined amount. At this time, because a resulting adsorption capacity of the adsorption portion is relatively small, a relatively large amount of fuel fails to be adsorbed at the adsorption portion and is supplied to the fuel electrode. Thus, the fuel may be supplied at a necessary flow rate to be stably burnt or combusted. The stable burning of fuel may lead to a stable start of the start-up operation of the fuel cell system. In addition, generally, a time period from the start of fuel supply to the achievement of the predetermined state of the adsorption state of fuel at the adsorption portion varies or differs depending on the temperature of the adsorption portion, types of fuel, and the like. Nevertheless, the control unit determines whether or not the adsorption state of fuel at the adsorption portion is in the predetermined state by the adsorption state determination portion before the start-up operation of the fuel cell system is started. Thus, regardless of the temperature of the adsorption portion or types of fuel, for example, the start-up operation of the fuel cell system may be promptly and stably started.

Preferably, whether or not the adsorption state of fuel at the adsorption portion is in the predetermined state is securely determinable by a simple method before the start-up operation of the fuel cell system is started, thereby promptly and stably starting the start-up operation of the fuel cell system.

More preferably, the flow rate of fuel supplied to the fuel electrode is inhibited from sufficiently increasing because of a failure such as fuel leakage, for example. Thus, the control unit may continuously determine that the adsorption state of fuel at the adsorption portion fails to be in the predetermined state. Nevertheless, in the disclosure, in a case where the adsorption state determination portion determines that the adsorption state of fuel at the adsorption portion is not in the predetermined state at a point at which the second predetermined time that is longer than the first predetermined time has elapsed from the start of fuel supply, the control unit determines that a failure such as fuel leakage, for example, occurs. Then, the warning portion issues a warning to a user. Thus, the control unit may inform a user of an occurrence of a failure such as fuel leakage before the start of the start-up operation of the fuel cell system.

Even more preferably, the flow rate of fuel supplied to the fuel electrode is inhibited from sufficiently increasing because of a failure such as fuel leakage, for example. Thus, the control unit may continuously determine that the adsorption state of fuel at the adsorption portion fails to be in the predetermined state. Nevertheless, in the disclosure, in a case where the adsorption state determination portion determines that the adsorption state of fuel at the adsorption portion is not in the predetermined state, i.e., fails to be in the predetermined state, when the number of calculations of the difference between the first pressure value and the second pressure value by the adsorption state determination portion reaches the predetermined value, the control unit determines an occurrence of a failure such as fuel leakage, for example, to alert the failure to a user. In consequence, the control unit informs a user of an occurrence of a failure such as fuel leakage, for example, before the start of the start-up operation of the fuel cell system.

Even more preferably, the flow rate (actual flow rate) of fuel detected by the flow rate detection device is greater than a required flow rate for combusting the fuel. Thus, the combustion of fuel may be stably started.

Generally, according to gas including a large carbon number, the adsorption state at the adsorption portion greatly varies or differs depending on the temperature thereof. Nevertheless, the control unit in the disclosure determines whether or not the adsorption state of fuel at the adsorption portion is in the predetermined state by the adsorption state determination portion before the start-up operation of the fuel cell system is started regardless of the temperature of the adsorption portion or types of fuel, for example. Thus, even when the fuel is gas of which major component is hydrocarbon including a carbon number of 3 or more, the start-up operation of the fuel cell system may be promptly and stably started.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a fuel cell system according to a first embodiment disclosed here;
Fig. 2 is a time chart illustrating a relation between an inflow amount of fuel flowing into an adsorption device illustrated in Fig. 1 and an outflow amount of fuel flowing out of the adsorption device;
Fig. 3 is a block diagram of a feedback control portion of a control unit illustrated in Fig. 1;
Fig. 4 is a flowchart of a control program performed by the control unit;
Fig. 5 is a time chart illustrating an operation of the fuel cell system based on the flowchart illustrated in Fig. 4;
Fig. 6 is a flowchart of a control program in the fuel cell system according to a second embodiment disclosed here;
Fig. 7 is a flowchart of a control program in the fuel cell system according to a third embodiment disclosed here;
Fig. 8 is a flowchart of a control program in the fuel cell system according to a fourth embodiment disclosed here;
Fig. 9 is a partial schematic view of the fuel cell system according to a fifth embodiment disclosed here; and
Fig. 10 is a flowchart of a control program in the fuel cell system according to the fifth embodiment.

### DETAILED DESCRIPTION

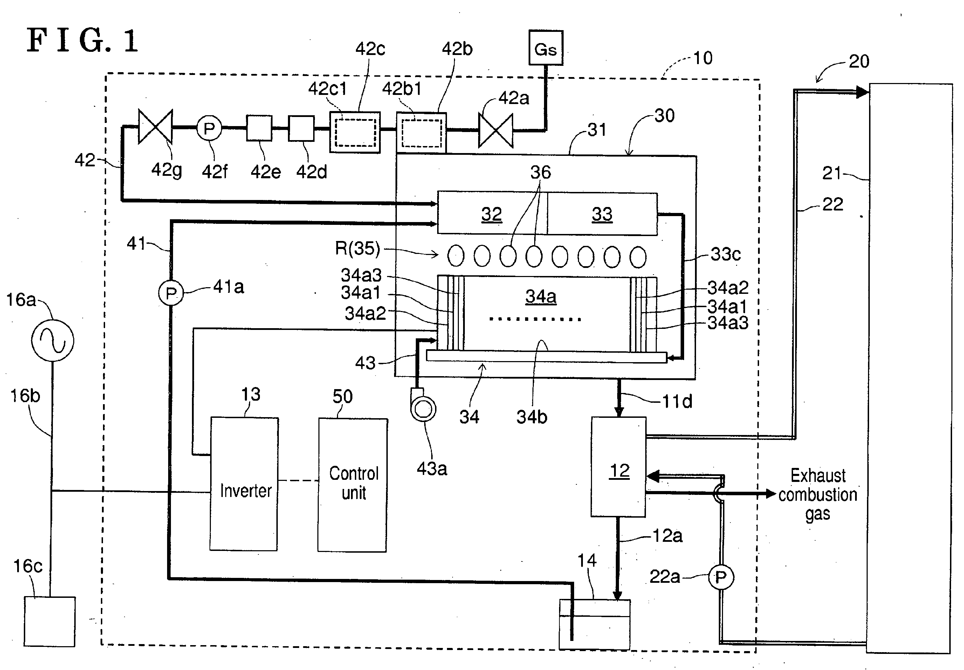

A first embodiment of a fuel cell system will be explained. As illustrated in Fig. 1, the fuel cell system includes a power generation unit 10 and a water storage tank 21. The power generation unit 10 includes a fuel cell module 30, a heat exchanger 12, an inverter device 13, a water tank 14, and a control unit 50.

The fuel cell module 30 is configured at least to include a fuel cell 34a. The fuel cell module 30 is supplied with fuel (source material), water (water for reforming), and oxidant gas (cathode air). The fuel cell 34a includes a fuel electrode supplied with the fuel and an oxidant electrode supplied with the oxidant gas.

The heat exchanger 12 is supplied with exhaust combustion gas emitted from the fuel cell module 30 and with storage water stored at the water storage tank 21 to perform a heat exchange between the exhaust combustion gas and the storage water. The water storage tank 21 which stores water (hot or warmed water) serving as the storage water is connected to a water circulation line 22 at which the water (storage water) circulates in an arrow direction in Fig. 1. A water circulation pump 22a and the heat exchanger 12 are arranged in the mentioned order from a lower end to an upper end at the water circulation line 22. An exhaust pipe 11 d from the fuel cell module 30 is connected to the heat exchanger 12 in a penetration manner. A condensed water supply pipe 12a which is connected to the water tank 14 is connected to the heat exchanger 12.

The exhaust combustion gas from the fuel cell module 30 is introduced into the heat exchanger 12 by flowing through the exhaust pipe 11 d to be condensed and cooled because of the heat exchange with the storage water. The exhaust combustion gas after condensation flows through the exhaust pipe 11d to be discharged to the outside of the power generation module 10. Condensed water resulting from the aforementioned heat exchange flows through the condensed water supply pipe 12a so as to be supplied to the water tank 14. The water tank 14 brings the condensed water to be formed into pure water (deionized water) by means of ion-exchange resin. The heat exchanger 12, the water storage tank 21, and the water circulation line 22 constitutes an exhaust heat recovery system 20. The exhaust heat recovery system 20 recovers exhaust heat of the fuel cell module 30 and stores the exhaust heat in the storage water.

The inverter device 13 receives a direct-current (DC) voltage output from the fuel cell 34a and converts the DC voltage into a predetermined alternating-current (AC) voltage so as to output the AC voltage to a power line 16b connected to an alternating system power supply 16a (hereinafter simply referred to as a system power supply 16a) and an external electric power load 16c (hereinafter simply referred to as an external power load 16c) such as an electrical appliance, for example. The inverter device 13 also receives an AC voltage from the system power supply 16a via the power line 16b and converts the AC voltage into a predetermined DC voltage so as to output the DC voltage to an auxiliary machinery (for example, pumps and a blower) and/or the control unit 50. The control unit 50 drives the auxiliary machinery to control the operation of the fuel cell system.

The fuel cell module 30 according to the present embodiment is a solid oxide fuel cell module. The fuel cell module 30 is configured at least to include a casing for module (which will hereinafter simply referred to as a casing) 31 and the fuel cell 24a. In the present embodiment, the fuel cell module 30 includes the casing 31, an evaporating portion 32, a reforming portion 33 and a fuel cell apparatus 34.

The casing 31 in a box form is made of an insulative material. The evaporating portion 32, the reforming portion 33, the fuel cell apparatus 34 and a combustion void R serving as a combusting portion 35 are disposed within the casing 31 in a state where the evaporating portion 32 and the reforming portion 33 are positioned at an upper side of the fuel cell apparatus 34. The combusting portion 35 is arranged between the reforming portion 33 and the fuel cell apparatus 34.

The evaporating portion 32, which is heated by combustion gas, evaporates water (condensed water) supplied to the evaporating portion 32 so as to generate and output water vapor (water vapor for reforming). The evaporating portion 32 also preheats fuel (source material) supplied to the evaporating portion 32. The evaporating portion 32 mixes the water vapor generated in the aforementioned manner and the fuel that is preheated so as to supply the mixture to the reforming portion 33. The fuel (source material) corresponds to gaseous fuel such as natural gas (methane gas), city gas, and LPG (liquefied petroleum gas), for example. In the present embodiment, the fuel corresponds to LPG of which major component is hydrocarbon including a carbon number of 3 or more, such as propane and butane, for example. In addition, odorant is added to the fuel so as to easily detect leakage of the fuel by smell, for example. The odorant is an organic sulfur compound such as tertiary-butylmercaptan or dimethyl sulfide, for example.

A first end of a water supply pipe 41 is connected to the evaporating portion 32. A second end (a lower end) of the water supply pipe 41 is connected to the water tank 14 so that the second end is positioned within the water tank 14. A water pump 41 a is provided at the water supply pipe 41. The water pump 41 a supplies water (condensed water) to the evaporating portion 32 and controls or adjusts a volume of water (i.e., a flow rate of water per unit time) supplied to the evaporating portion 32 based on a command value from the control unit 50.

The fuel is supplied to the evaporating portion 32 via a fuel supply pipe 42 from a supply source for fuel (which will be hereinafter simply referred to as a supply source) Gs. The supply source Gs corresponds to an LPG gas cylinder, for example. A first shut-off valve 42a serving as a first fuel valve, a first desulfurizer 42b serving as an adsorption device, a second desulfurizer 42c, a flow sensor 42d serving as a flow rate detection device, a buffer tank 42e, a fuel pump 42f serving as a fuel supply device, and a check valve 42g are disposed in the mentioned order from an upstream side at the fuel supply pipe 42.

The first shut-off valve 42a, which is disposed between the supply source Gs and the first desulfurizer 42b, selectively opens and closes the fuel supply pipe 42 to permit and prohibit the flow of fuel through the fuel supply pipe 42. The first desulfurizer 42b, which is disposed between the supply source Gs and the fuel electrode, includes a first adsorption portion 42b1 serving as an adsorption portion that adsorbs (i.e., desulfurizes) the odorant (organic sulfur compound) added to the fuel. Specifically, the first desulfurizer 42b is disposed between the first shut-off valve 42a and the second desulfurizer 42c. The first adsorption portion 42b1 accommodates a first adsorption agent that adsorbs the odorant. The first adsorption agent corresponds to a porous material such as zeolite, for example, on which metal, for example, silver or copper, is deposited. Generally, the adsorption agent adsorbs the water vapor. Thus, in a case of fuel having a relatively high dew point by including a relatively large water vapor, the adsorption agent adsorbs the water vapor so that adsorption performance relative to the odorant in the fuel decreases. At this time, however, the amount of adsorbing the water vapor by the adsorption agent decreases in a case where the temperature of the adsorption agent increases to a relatively high temperature (approximately 50 °C or greater). As a result, the adsorption performance of the adsorption agent relative to the odorant in the fuel having a relatively high dew point is secured. In order to ensure the adsorption performance relative to the odorant in the fuel having a relatively high dew point, the first desulfurizer 42b is configured so that the temperature of the first adsorption agent is relatively high (approximately 50 °C or greater). Specifically, the first desulfurizer 42b is arranged in contact with or in the vicinity of an outer wall surface of the casing 31 so as to receive heat from the fuel cell module 30.

The second desulfurizer 42c, which is disposed between the first desulfurizer 42b and the flow sensor 42d, includes a second adsorption portion 42c1 that adsorbs (desulfurizes) the odorant (organic sulfur compound) added to the fuel. The second adsorption portion 42c1 accommodates a second adsorption agent that adsorbs the odorant. The second adsorption agent corresponds to a porous material such as zeolite, for example. Generally, in a case where the temperature of the adsorption agent is relatively high (approximately 50 °C or greater), the adsorption performance of the adsorption agent relative to the odorant in the fuel having a relatively low dew point decreases. Thus, when the odorant in the fuel having a relatively low dew point is adsorbed by the first adsorption portion 42b1 of the first desulfurizer 42b which is maintained at a relatively high temperature, the amount of adsorbing the odorant should increase by an increase of amount of the first adsorption agent. Nevertheless, the increase of amount of the first adsorption agent may lead to an issue of space or insufficient heating of the first adsorption agent because of low efficiency of heat recovery from the fuel cell module 30, for example. Therefore, in order to ensure the adsorption performance relative to the odorant in the fuel having a relatively low dew point, the second desulfurizer 42c is configured so that the temperature of the second adsorption agent is lower than the temperature of the first adsorption agent (substantially equal to an outside air temperature). Specifically, the second desulfurizer 42c is disposed away from the fuel cell module 30.

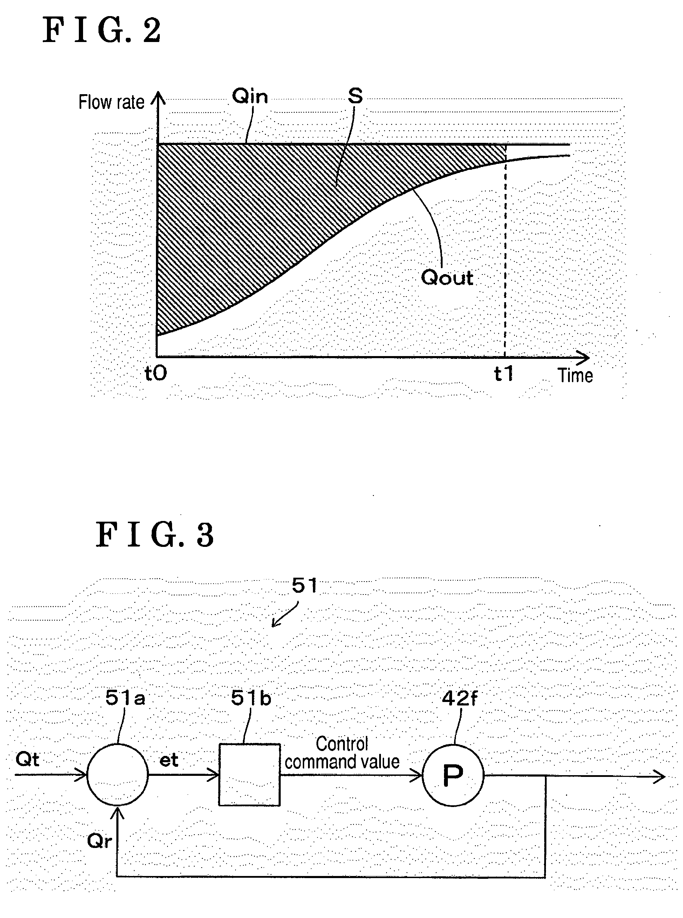

The first adsorption agent and the second adsorption agent may adsorb not only the odorant contained in the fuel but also the fuel itself (mainly hydrocarbon). The amount of adsorbing the fuel by each of the first and second adsorption agents will be explained with reference to a time chart illustrated in Fig. 2. The following explanation is started from a point (point of time) at which the supply of fuel is started with an inflow rate Qin serving as a flow rate of fuel that flows into the first desulfurizer 42b in a state where the fuel is not at all adsorbed at the first and second adsorption agents. At the time when the supply of fuel is started at time t0, the fuel is not adsorbed at the first and second adsorption agents. Thus, the relatively large amount of fuel is adsorbed at each of the first and second adsorption agents. An outflow rate Qout serving as a flow rate of fuel that is not adsorbed at each of the first and second adsorption agents and that flows out of the second desulfurizer 42c is relatively small. Specifically, the outflow rate Qout at this time is approximately 10% of the inflow rate Qin. Thereafter, because of increase of the adsorption amount of fuel at each of the first and second adsorption agents, the amount of fuel which fails to be adsorbed at each of the first and second adsorption agents increases, which results in increase of the outflow rate Qout. Then, the adsorption amount of fuel at each of the first and second adsorption agents reaches a saturated state so that a difference between the inflow rate Qin and the outflow rate Qout decreases to a relatively small value at time t1. At this time, the adsorption amount of fuel by the first and second adsorption agents corresponds to an area S defined between the inflow rate Qin and the outflow rate Qout from time t0 to time t1. Therefore, by previously obtaining the adsorption amount of fuel in the saturated state relative to each of the first and second adsorption agents (which will be hereinafter referred to as a saturated adsorption amount), a ratio of the adsorption amount of fuel at each of the first and second adsorption agents relative to the saturated adsorption amount may be acquired. Further, by previously obtaining time-series of the outflow rate Qout relative to the inflow rate Qin, a ratio of the adsorption amount of fuel at each of the first and second adsorption agents relative to the saturated adsorption amount at one point of time is obtainable from the outflow rate Qout at the aforementioned point of time. Because the amount of odorant contained in the fuel is extremely small (approximately 10 ppm), the odorant is adsorbed at a portion of each of the first and second adsorption agents where the fuel is not adsorbed even in a case where the adsorption amount of fuel approaches the saturated state.

The adsorption amount of fuel relative to each of the first and second adsorption agents varies or changes depending on the temperature thereof. The temperature of each of the first and second adsorption portions 42b1 and 42c1 changes on a basis of an outside air temperature, an exhaust heat temperature of the fuel cell module 30, and the like. That is, depending on the temperature change of each of the first and second adsorption portions 42b1 and 42c1, the fuel is adsorbed or desorbed at each of the first and second adsorption agents. Accordingly, the flow rate of fuel at the downstream side of each of the first and second desulfurizers 42b and 42c may fluctuates relative to the flow rate of fuel at the upstream side of each of the first and second desulfurizers 42b and 42c. In addition, depending on types of fuel, types and contents of hydrocarbon constituting the fuel vary or differ. Thus, in a case where LPG and city gas at respective rated flow rates are compared with each other, for example, a time period for the adsorption amount of LPG to reach the saturated adsorption amount at each of the first and second adsorption agents is more than two times longer than a time period for the adsorption amount of city gas to reach the saturated adsorption amount at each of the first and second adsorption agents.

The flow sensor 42d is disposed between the first desulfurizer 42b and the fuel electrode to detect the flow rate of fuel (flow rate per unit time). Specifically, the flow sensor 42d is arranged between the second desulfurizer 42c and the buffer tank 42e. The flow sensor 42d detects the flow rate of fuel flowing or circulating through the fuel supply pipe 42 at the position where the flow sensor 42d is placed. Because the flow sensor 42d is arranged at the downstream side of the first and second desulfurizers 42b and 42c at the fuel supply pipe 42, the flow sensor 42d detects the flow rate of fuel after the fuel passes through the first and second adsorption portions 42b1 and 42c1. That is, an actual flow rate Qr serving as a flow rate of fuel detected by the flow sensor 42d corresponds to a flow rate of fuel supplied to the fuel cell module 30 (the evaporating portion 32). The actual flow rate Qr detected by the flow sensor 42d is transmitted as a detection signal to the control unit 50. The buffer tank 42e absorbs vibration (pulsation) of the fuel pump 42f to restrain accuracy decrease of the flow sensor 42d or deviation from a true value thereof resulting from the pulsation of the fuel pump 42f.

The fuel pump 42f is disposed between the supply source Gs and the fuel electrode to supply the fuel. Specifically, the fuel pump 42f is arranged between the buffer tank 42e and the check valve 42g to supply the fuel (source material) to the evaporating portion 32. The fuel pump 42f adjusts and controls the flow rate of fuel (flow rate per unit time) from the supply source Gs based on a control command value from the control unit 50.

The check valve 42g is disposed between the fuel pump 42f and the fuel cell module 30 (the evaporating portion 32). The check valve 42g allows the flow of fuel from the supply source Gs to the fuel cell module 30 but prohibits the flow of fuel in a reverse direction (i.e., from the fuel cell module 30 to the supply source Gs) at the position where the check valve 42g is placed.

The reforming portion 33 generates reformed gas from source material and water vapor (water vapor for reforming). Specifically, the reforming portion 33 is heated by combustion gas so as to receive heat necessary for a water vapor reforming reaction. As a result, the reforming portion 33 generates the reformed gas from mixed gas (source material and water vapor) supplied from the evaporating portion 32 and discharges the reformed gas. The inside of the reforming portion 33 is filled with a catalyst, for example, a ruthenium catalyst (Ru catalyst) and a nickel catalyst (Ni catalyst). The mixed gas supplied from the evaporating portion 32 reacts by means of the catalyst so as to be reformed, thereby generating hydrogen gas and carbon monoxide gas (water vapor reforming reaction). At the same time, carbon monoxide generated during the water vapor reforming reaction and water vapor react so as to be converted to hydrogen gas and carbon dioxide, i.e., a carbon monoxide shift reaction occurs. The thus generated gas (reformed gas) is supplied to the fuel electrode of the fuel cell 34a. The reformed gas includes hydrogen, carbon monoxide, carbon dioxide, water vapor, propane that is not reformed, and water (water vapor) not used for reforming. The water vapor reforming reaction is an endothermic reaction while the carbon monoxide shift reaction is an exothermic reaction.

The fuel cell apparatus 34 includes the fuel cell 34a and a manifold 34b. The fuel cell 34a generates an electric power from the reformed gas (anode gas) and the oxidant gas (cathode air). The oxidant gas is air. The fuel cell 34a includes plural cells 34a1 which are laminated along a right-left direction in Fig. 1. Each of the cells 34a1 includes a fuel electrode, an air electrode (an oxidant electrode), and an electrolyte disposed between the fuel electrode and the air electrode. The fuel cell 34a according to the present embodiment is a solid oxide fuel cell (SOFC) where zirconium oxide serving as a solid oxide is used as the electrolyte. The fuel electrode of the fuel cell 34a is supplied with hydrogen, carbon monoxide, and propane gas, for example, as the fuel. An operating temperature of the fuel cell 34a is substantially in a range from 400 °C to 1,000 °C. Not only hydrogen is used as the fuel but also natural gas or coal gas, for example, may be directly used as the fuel. When the natural gas or the coal gas is directly used as the fuel, the reforming portion 33 may be omitted. That is, the fuel is directly supplied to the fuel electrode from the supply source Gs. Accordingly, the fuel to which the odorant is added is directly supplied or supplied after reformed to the fuel electrode from the supply source Gs.

A fuel flow passage 34a2 through which the reformed gas serving as the fuel flows is formed at each of the cells 34a1 so as to face the fuel electrode thereof. An air flow passage 34a3 through which air (cathode air) serving as the oxidant gas flows is formed at each of the cells 34a1 so as to face the air electrode thereof.

The fuel cell 34a is placed on the manifold 34b. The reformed gas is supplied from the reforming portion 33 to the manifold 34b via a reformed gas supply pipe 33c. A lower end (a first end) of the fuel flow passage 34a2 is connected to a fuel lead-out port formed at the manifold 34b. The reformed gas led out from the fuel lead-out port of the manifold 34b is introduced from the lower end of the fuel flow passage 34a2 and is discharged from an upper end of the fuel flow passage 34a2. The cathode air sent from a cathode air blower 43a flows through a cathode air supply pipe 43 so as to be supplied from a lower end of the air flow passage 34a3 and be discharged from an upper end of the air flow passage 34a3.

The cathode air blower 43a is arranged within the power generation unit 10. The cathode air blower 43a suctions air within the power generation unit 10 and discharges the air to the air electrode of the fuel cell 34a. A discharge volume of air by the cathode air blower 43a is regulated and controlled (for example, controlled on a basis of a consumed power of the external power load 16c (a load power of the fuel cell 34a).

In the fuel cell 34a, the source material (fuel) supplied to the fuel electrode and the oxidant gas supplied to the air electrode achieve the power generation. Reactions indicated by a chemical formula (1) and a chemical formula (2) as below occur at the fuel electrode while a reaction indicated by a chemical formula (3) as below occurs at the air electrode. That is, oxide ion (O²⁻) generated at the air electrode penetrates through the electrolyte so as to react with hydrogen at the fuel electrode, thereby generating an electric energy. As a result, the reformed gas and the oxidant gas (air) which have not been used in the power generation are discharged from the fuel flow passage 34a2 and the air flow passage 34a3 respectively.

(1) H₂ + O²⁻ → H₂O + 2e⁻

(2) CO + O²⁻ → CO₂ + 2e⁻

(3) 1/2O₂ + 2e⁻ → O²⁻

The reformed gas (anode-off gas) that has not been used in the power generation is discharged from the fuel flow passage 34a2 and is burnt at the combustion void R by means of the oxidant gas (cathode-off gas) that has not been used in the power generation. The resulting combustion gas (flames 36) heats the evaporating portion 32 and the reforming portion 33, and further brings the inside of the fuel cell module 30 to be heated at an operating temperature. Accordingly, the aforementioned combustion void R constitutes the combusting portion 35 heating the evaporating portion 32 and the reforming portion 33 by burning the anode-off gas from the fuel cell 34a and the cathode-off gas from the fuel cell 34a.

The combusting portion 35 (the combustion void R) burns combustible gas and oxidant gas. In the embodiment, the combustible gas corresponds to fuel for reforming, anode-off gas, and carbon monoxide, for example. That is, the combusting portion 35 burns anode-off gas discharged from the fuel cell 34a. The combusting portion 35 burns anode-off gas to generate exhaust combustion gas. The exhaust combustion gas is discharged from the fuel cell module 30 through the exhaust pipe 11d.

The control unit 50 at least controls the fuel cell 34a. The control unit 50 controls generated output of the fuel cell 34a to be equal to the consumed power of the external power load 16c. In addition, the control unit 50 includes a feedback control portion 51 that performs a feedback control in which a control command value for the fuel pump 42f is calculated and output to the fuel pump 42f so that the actual flow rate Qr detected by the flow sensor 42d becomes equal to a target flow rate Qt of the fuel. As illustrated in Fig. 3, the feedback control portion 51 includes a subtraction portion 51 a and a control command value calculation portion 51 b. The target flow rate Qt is obtained on a basis of the consumed power of the external power load 16c and a fuel supply map stored beforehand at the control unit 50. The fuel supply map indicates a correlated relation between the consumed power of the external power load 16c and a supply amount (target flow rate Qt) of each of the source material, water and cathode air.

The target flow rate Qt and the actual flow rate Qr are input to the subtraction portion 51 a. The subtraction portion 51 a calculates a difference et between the target flow rate Qt and the actual flow rate Qr by subtracting the actual flow rate Qr from the target flow rate Qt. The subtraction portion 51 a outputs the calculation value, i.e., the difference et, to the control command value calculation portion 51 b. The control command value calculation portion 51 b calculates a control command value (the number of rotations) of the fuel pump 42f based on the difference et input to the control command value calculation portion 51 b. At this time, because the fuel pump 42f is controlled by PWM control, the control command value is calculated as a duty ratio in the PWM control. The control command value in the duty ratio is output to a driver circuit of the fuel pump 42f. Accordingly, the feedback control is performed on a basis of the consumed power of the external power load 16c (load power of the fuel cell 34a) so that the actual flow rate Qr is equal to the target flow rate Qt.

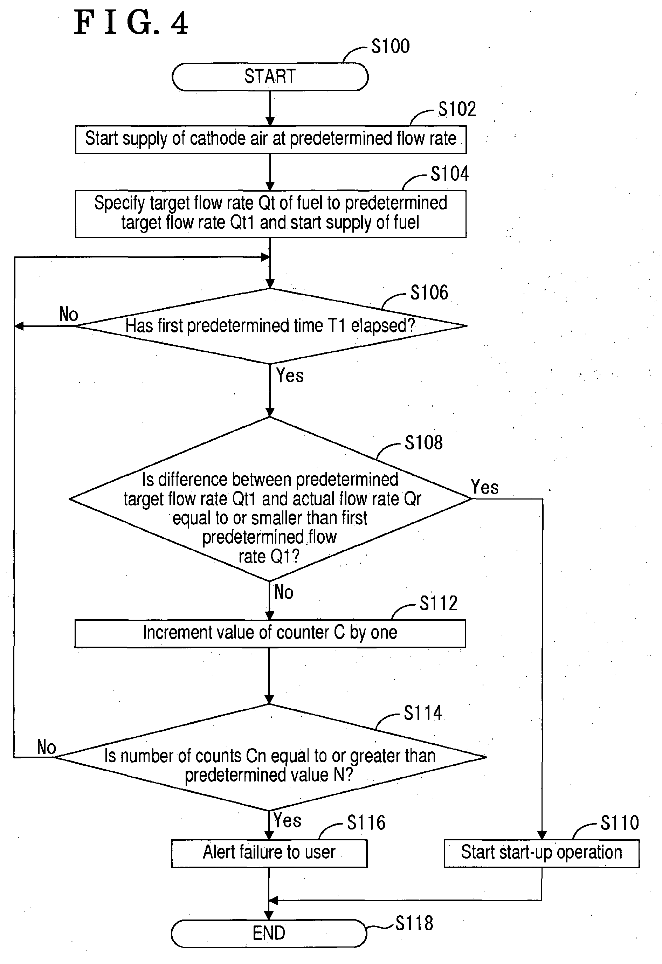

Next, an operation of the fuel cell system performed for starting a start-up operation (i.e., performed before a start-up operation is started) will be explained with reference to a flowchart illustrated in Fig. 4. First, the combusting portion 35 is ignited by an ignition heater to burn combustible gas (fuel). Thus, a flow rate of fuel required for burning or combusting the fuel at the combusting portion 35 (i.e., a required flow rate Qn) is secured and thereafter the start-up operation of the fuel cell system is started. In a case where the required flow rate Qn is not secured, combustion of the combusting portion 35 is unstable, for example, the combusting portion 35 is not ignited or is ignited but flame extinction occurs at the combusting portion 35.

In a case where a start switch is pressed to start the operation of the fuel cell system or the operation is started in accordance with a planned operation, the control unit 50 starts program at step S100 (hereinafter "step" will be omitted) illustrated in Fig. 4. In S102, a supply of cathode air is started by the cathode air blower 43a at a predetermined flow rate, for example, 1m³ per minute for the purpose of decreasing the concentration of fuel sent out from the fuel cell 34a. Then, the control unit 50 starts supplying the fuel by specifying the target flow rate Qt to a predetermined target flow rate Qt1 in S104. The predetermined target flow rate Qt1 is specified to be greater than the required flow rate Qn. In S106, the control unit 50 determines whether or not a first predetermined time T1 has elapsed from a point (point of time) at which the supply of fuel is started (i.e., from the start of fuel supply). The first predetermined time T1 is defined from the point at which the supply of fuel is started in a state where the fuel is not at all adsorbed at each of the first and second adsorption agents to a point (point of time) at which a ratio of the adsorption amount of fuel at each of the first and second adsorption agents relative to the saturated adsorption amount reaches a first predetermined ratio. The first predetermined ratio is specified, for example, to be 30%. The control unit 50 repeats a negative determination ("NO") in S106 when the elapse of the first predetermined time T1 is not obtained. On the other hand, in a case where the elapse of the first predetermined time T1 is obtained, the control unit 50 makes a positive determination ("YES") in S106 and the program proceeds to S108.

The control unit 50 determines whether or not the adsorption state of fuel at each of the first and second adsorption portions 42b1 and 42c1 is in a predetermined state in S108 serving as an adsorption state determination portion. Specifically, the control unit 50 determines whether or not a difference between the predetermined target flow rate Qt1 and the actual flow rate Qr (i.e., difference obtained by subtracting the actual flow rate Qr from the predetermined target flow rate Qt1, for example) is equal to or smaller than a first predetermined flow rate Q1. The first predetermined flow rate Q1 is specified so that the adsorption state of fuel at each of the first and second adsorption portions 42b1 and 42c1 is brought in the predetermined state in a case where the difference between the predetermined target flow rate Qt1 and the actual flow rate Qr is equal to or smaller than the first predetermined flow rate Q1. At this time, the adsorption state of fuel at each of the first and second adsorption portions 42b1 and 42c1 is represented as the adsorption amount of fuel at each of the first and second adsorption agents. The predetermined state corresponds to a state where the ratio of the adsorption amount of fuel at the adsorption agents relative to the saturated adsorption amount is equal to or greater than a second predetermined ratio. The second predetermined ratio is obtained in a case where the adsorption amount of fuel at the adsorption agents increases so that the actual flow rate Qr (corresponding to the outflow rate Qout in Fig. 2) exceeds the required flow rate Qn in a state where the fuel is supplied at the predetermined target flow rate Qt1 (corresponding to the inflow rate Qin in Fig. 2). The second predetermined ratio is specified to be 80%, for example. That is, in a case where the difference between the predetermined target flow rate Qt1 and the actual flow rate Qr is equal to or smaller than the first predetermined flow rate Q1, the ratio of the adsorption amount of fuel at the absorption portions 42b1 and 42c1 relative to the saturated adsorption amount is equal to or greater than the second predetermined ratio and the actual flow rate Qr is greater than the required flow rate Qn. In this case, the absorption state of fuel at the absorption portions 42b1 and 42c1 is in the predetermined state. The control unit 50 thus determines YES in S108 and starts the start-up operation of the fuel cell system in S110 serving as a start-up operation start portion.

In a case where the start-up operation is started, the control unit 50 controls the auxiliary machinery to operate. Specifically, the control unit 50 operates the pumps 41a and 42f to start supplying the fuel (source material) and water to the fuel cell module 30 (the evaporating portion 32). As mentioned above, the mixed gas is generated at the evaporating portion 32 and is supplied to the reforming portion 33. The reforming portion 33 generates the reformed gas from the mixed gas that is supplied to the reforming portion 33. The reformed gas generated at the reforming portion 33 is supplied to the fuel cell 34a. Then, the reformed gas sent out from the fuel cell 34a is burnt at the combusting portion 35. When the reforming portion 33 reaches the operating temperature of the fuel cell 34a (for example, 400°C), the start-up operation is completed and a power generation operation of the fuel cell system is started.

On the other hand, in a case where the difference between the predetermined target flow rate Qt1 and the actual flow rate Qr is greater than the first predetermined flow rate Q1, the control unit 50 determines NO in S108 and increments the number of counts Cn of a counter C (value of a counter C) by one in S112. The counter C counts the number of negative determinations in S108. The number of counts Cn is specified to zero when the program is started. Then, the control unit 50 determines whether or not a second predetermined time T2 has elapsed after the start of fuel supply in S114. Specifically, the control unit 50 determines whether or not the number of counts Cn of the counter C is equal to or greater than a predetermined value N. A point at which the number of counts Cn reaches the predetermined value N corresponds to a point at which the second predetermined time T2 has elapsed from the start of fuel supply. That is, the second predetermined time T2 is obtained by multiplying the predetermined value N by the first predetermined time T1. The second predetermined time T2 is specified to be longer than a time period during which the adsorption state of fuel at the adsorption portions 42b1 and 42c1 is brought to the predetermined state from the start of fuel supply in a state where the fuel is not at all adsorbed at the adsorption portions 42b1 and 42c1 and a failure such as fuel leakage, for example, is not found. In a case where the number of counts Cn is smaller than the predetermined value N, the control unit 50 determines NO in S114 so that the program returns to S106. That is, the supply of fuel is continued and the control unit 50 again determines whether or not the adsorption state of fuel at the adsorption portions 42b1 and 42c1 is in the predetermined state (in S108 serving as the adsorption state determination portion) at the time when the first predetermined time T1 has elapsed (in S106) from a point at which the control unit 50 performs the determination in S114. Accordingly, the control unit 50 repeatedly determines whether or not the adsorption state of fuel at the adsorption portions 42b1 and 42c1 is in the predetermined state every first predetermined time T1 until the elapse of the second predetermined time T2.

In a case where the supply of fuel is continued to increase the adsorption amount of fuel at the adsorption agents and the difference between the predetermined target flow rate Qt1 and the actual flow rate Qr becomes equal to or smaller than the first predetermined flow rate Q1 before the elapse of the second predetermined time T2, the control unit 50 determines YES in S108. In this case, the control unit 50 starts the start-up operation of the fuel cell system in S110 (start-up operation start portion). On the other hand, when the second predetermined time T2 has elapsed after the start of fuel supply, the number of counts Cn is equal to or greater than the predetermined value N. In this case, the difference between the predetermined target flow rate Qt1 and the actual flow rate Qr is still greater than the first predetermined flow rate Q1 even though the time period during which the adsorption state of fuel at the adsorption portions 42b1 and 42c1 is supposed to be in the predetermined state has elapsed. Thus, the control unit 50 determines an occurrence of failure, for example, fuel leakage. The control unit 50 determines YES in S114 to issue a warning (to alert the failure) to a user in S116 serving as a warning portion. The warning may be achieved by indication at an indicator (an LED screen or a lamp, for example) or sound by a speaker. In this case, the control unit 50 is inhibited from starting the start-up operation of the fuel cell system. The control unit 50 stops the fuel supply when the warning is issued in S116.

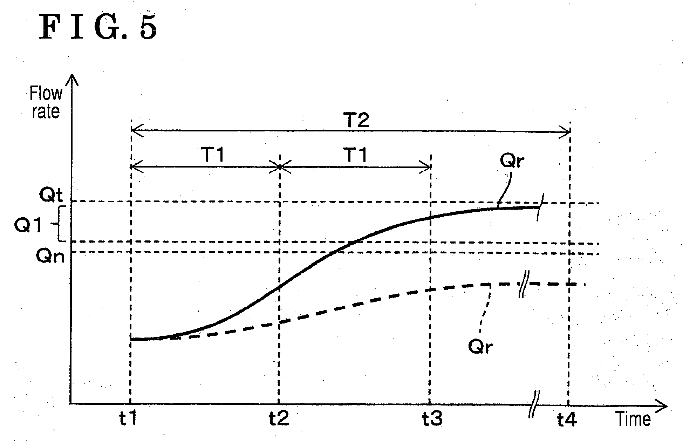

Next, changes of the actual flow rate Qr during the operation of the fuel cell system will be explained with reference to a time chart in Fig. 5. A case where a failure such as fuel leakage, for example, is not found in a state where the adsorption state of fuel at the adsorption portions 42b1 and 42c1 does not reach the predetermined state will be explained. In the aforementioned case, the predetermined value N is specified to be four. The actual flow rate Qr is indicated by a solid line in Fig. 5.

The control unit 50 starts the supply of cathode air in a case where the start switch is pressed to start the operation of the fuel cell system or the operation is started in accordance with the planned operation in S102. In addition, the control unit 50 starts the supply of fuel by specifying the target flow rate Qt of fuel to the predetermined target flow rate Qt1 so as to drive the fuel pump 42f (time t1 in S104). At this time, the adsorption amount of fuel at each of the adsorption agents is not yet large, i.e., relatively small, so that a relatively large amount of fuel passing through the first and second desulfurizers 42b and 42c is adsorbed at the adsorption agents. Thus, the actual flow rate Qr of fuel not adsorbed at the adsorption agents and supplied to the evaporating portion 32 is relatively small. Thereafter, the adsorption amount of fuel at the adsorption agents increases to thereby increase the actual flow rate Qr. Nevertheless, at a point (time t2) at which the first predetermined time T1 has elapsed after the start of fuel supply (S106), the difference between the predetermined target flow rate Qt1 and the actual flow rate Qr is greater than the first predetermined flow rate Q1. Specifically, because the ratio of adsorption amount of fuel at the adsorption agents relative to the saturated adsorption amount of fuel is equal to or smaller than the second predetermined ratio, the control unit 50 determines that the adsorption state of fuel at the adsorption portions 42b1 and 42c1 fails to be in the predetermined state in S108. At this time, the number of counts Cn is one (S112 and S114) so that the control unit 50 continues the supply of fuel in S106.

At a point (time t3) at which the first predetermined time T1 has further elapsed after the elapse of the first predetermined time T1 (time t2) from the start of fuel supply, the difference between the predetermined target flow rate Qt1 and the actual flow rate Qr is equal to or smaller than the first predetermined flow rate Q1. Specifically, because of the increase of adsorption amount of fuel at the adsorption agents, the ratio of the adsorption amount relative to the saturated adsorption amount is equal to or greater than the second predetermined ratio. In this case, the adsorption state of fuel at the adsorption portions 42b1 and 42c1 is in the predetermined state (in S108) so that the start-up operation of the fuel cell system is started in S110. At this time, the actual flow rate Qr is greater than the required flow rate Qn. Thus, the combustion of fuel is stably started at the combusting portion 35.

A case where a failure such as fuel leakage, for example, occurs in a state where the adsorption state of fuel at the adsorption portions 42b1 and 42c1 does not reach the predetermined state will be explained. In this case, the actual flow rate Qr is indicated by a dotted line in Fig. 5. Because a failure such as fuel leakage occurs, the actual flow rate Qr is inhibited from sufficiently increasing so that the difference between the predetermined target flow rate Qt1 and the actual flow rate Qr is maintained to be equal to or greater than the first predetermined flow rate Q1. In the aforementioned state, the second predetermined time T2 has elapsed from the start of fuel supply (time t4). At this time, the number of counts Cn reaches the predetermined value N (=4). Thus, the control unit 50 determines the occurrence of failure such as fuel leakage, for example, to alert the failure to a user in S114 and S116.

According to the first embodiment, the fuel cell system includes the fuel cell 34a including the fuel electrode supplied with fuel to which odorant is added, the fuel being directly supplied or supplied after reformed to the fuel electrode from the supply source Gs, the fuel cell 34a including the oxidant electrode supplied with oxidant gas, the fuel cell 34a generating an electric power from the fuel and the oxidant gas, the first desulfurizer 42b disposed between the supply source Gs and the fuel electrode and including the first adsorption portion 42b1 which is configured to adsorb the odorant and the fuel, and the control unit 50 controlling at least the fuel cell 34a, the control unit 50 supplying the fuel before the start-up operation of the fuel cell system is started and including the adsorption state determination portion (S108) determining whether or not the adsorption state of fuel at the first adsorption portion 42b1 is in the predetermined state and a start-up operation start portion (S110) starting the start-up operation of the fuel cell system in a case where the adsorption state determination portion (S108) determines that the adsorption state of fuel at the first adsorption portion 42b1 is in the predetermined state. Accordingly, the control unit 50 supplies the fuel before the start of the start-up operation of the fuel cell system and determines whether or not the adsorption state of fuel at the first adsorption portion 42b1 is in the predetermined state by the adsorption state determination portion. At this time, the adsorption state of fuel at the first adsorption portion 42b1 is represented by the adsorption amount of fuel at the first adsorption portion 42b1. In a case where the adsorption state of fuel is in the predetermined state, the adsorption amount of fuel at the first adsorption portion 42b1 is equal to or greater than a predetermined amount. At this time, because the resulting adsorption capacity of the first adsorption portion 42b1 is relatively small, a relatively large amount of fuel fails to be adsorbed at the first adsorption portion 42b1 and is supplied to the fuel electrode. Thus, the fuel may be supplied at the necessary flow rate to be stably burnt or combusted. The stable burning of fuel may lead to a stable start of the start-up operation of the fuel cell system. In addition, generally, a time period from the start of fuel supply to the achievement of the predetermined state of the adsorption state of fuel at the first adsorption portion 42b1 varies or differs depending on the temperature of the first adsorption portion 42b1, types of fuel, and the like. Nevertheless, the control unit 50 determines whether or not the adsorption state of fuel at the first adsorption portion 42b1 is in the predetermined state by the adsorption state determination portion before the start-up operation of the fuel cell system is started. Thus, regardless of the temperature of the first adsorption portion 42b1 or types of fuel, for example, the start-up operation of the fuel cell system may be promptly and stably started. The control unit 50 determines that the adsorption state of fuel at the first adsorption portion 42b1 is in the predetermined state by the adsorption state determination portion (S108) before the start-up operation of the fuel cell system is started and then starts the start-up operation of the fuel cell. Therefore, the fuel not used for the power generation is restrained from being discharged from the fuel cell 34a before the start of the start-up operation of the fuel cell system.

In addition, the fuel cell system further includes the fuel pump 42f disposed between the supply source Gs and the fuel electrode to supply the fuel and the flow sensor 42d disposed between the first desulfurizer 42b and the fuel electrode to detect a flow rate of fuel. The control unit 50 further includes the feedback control portion 51 performing a feedback control by calculating a control command value for the fuel pump 42f to output the control command value to the fuel pump 42f so that the actual flow rate Qr detected by the flow sensor 42d becomes equal to the target flow rate Qt of fuel. The control unit 50 is configured to specify the target flow rate Qt to the predetermined target flow rate Qt1 and to start supplying the fuel, and the adsorption state determination portion (S108) determines that the adsorption state of fuel at the first adsorption portion 42b1 is in the predetermined state in a case where a difference between the actual flow rate Qr serving as a flow rate detected by the flow sensor 42d every first predetermined time T1 from the start of fuel supply and the predetermined target flow rate Qt1 is equal to or smaller than the first predetermined flow rate Q1. Accordingly, whether or not the adsorption state of fuel at the first adsorption portion 42b1 is in the predetermined state is securely determinable by a simple method before the start-up operation of the fuel cell system is started, thereby promptly and stably starting the start-up operation of the fuel cell system.

Further, the control unit 50 includes the warning portion (S116) that issues a warning to a user in a case where the adsorption state determination portion (S108) determines that the adsorption state of fuel at the first adsorption portion 42b1 fails to be in the predetermined state when the second predetermined time T2 has elapsed from the start of fuel supply, the second predetermined time T2 being longer than the first predetermined time T1. Accordingly, in a case where the adsorption state determination portion (S108) determines that the adsorption state of fuel at the first adsorption portion 42b1 is not in the predetermined state at the point at which the second predetermined time T2 that is longer than the first predetermined time T1 has elapsed from the start of fuel supply, the control unit 50 determines that a failure such as fuel leakage, for example, occurs. Then, the warning portion (S116) issues a warning to a user. Thus, the control unit 50 may inform a user of an occurrence of a failure such as fuel leakage before the start of the start-up operation of the fuel cell system.

Furthermore, the fuel is gas of which major component is hydrocarbon including a carbon number of 3 or more. Generally, according to gas including a large carbon number, the adsorption state at the first adsorption portion 42b1 greatly varies or differs depending on the temperature thereof. Nevertheless, the control unit 50 determines whether or not the adsorption state of fuel at the first adsorption portion 42b1 is in the predetermined state by the adsorption state determination portion before the start-up operation of the fuel cell system is started regardless of the temperature of the first adsorption portion 42b1 or types of fuel, for example. Thus, even when the fuel is gas of which major component is hydrocarbon including a carbon number of 3 or more, the start-up operation of the fuel cell system may be promptly and stably started.

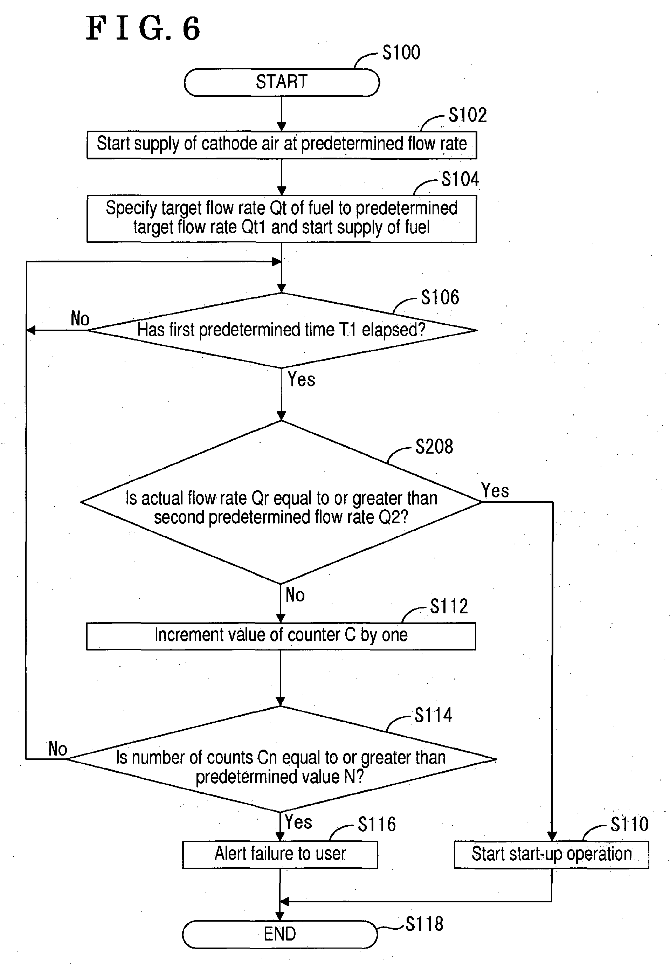

A second embodiment of the fuel cell system is explained. The explanation mainly includes a different portion of the second embodiment from the first embodiment. The substantially same structures and configurations of the second embodiment as those of the first embodiment bear the same reference numerals. In the second embodiment, the control unit 50 executes program illustrated in Fig. 6 instead of program illustrated in Fig. 4 in the first embodiment.

In the first embodiment, the control unit 50 determines whether or not the difference between the predetermined target flow rate Qt1 and the actual flow rate Qr is equal to or smaller than the first predetermined flow rate Q1 in S108 serving as the adsorption state determination portion so as to determine whether or not the adsorption state of fuel at the adsorption portions 42b1 and 42c1 is in the predetermined state. On the other hand, in the second embodiment, it is determined whether or not the actual flow rate Or is equal to or greater than a second predetermined flow rate Q2 in S208 serving as the adsorption state determination portion. The second predetermined flow rate Q2 is specified to be smaller than the predetermined target flow rate Qt1. In addition, the second predetermined flow rate Q2 is specified so that the adsorption state of fuel at the adsorption portions 42b1 and 42c1 is in the predetermined state in a case where the actual flow rate Qr is equal to or greater than the second predetermined flow rate Q2. That is, when the actual flow rate Qr is equal to or greater than the second predetermined flow rate Q2 because of the increase of adsorption amount of fuel at each of the adsorption agents at which the fuel is adsorbed, the ratio of the adsorption amount of fuel at the adsorption portions 42b1 and 42c1 relative to the saturated adsorption amount is equal to or greater than the second predetermined ratio and the actual flow rate Qr is greater than the required flow rate Qn. In this case, the adsorption state of fuel at the adsorption portions 42b1 and 42c1 is in the predetermined state and thus the control unit 50 determines YES in S208. The control unit 50 starts the start-up operation of the fuel cell system in S110 serving as the start-up operation start portion.

According to the second embodiment, the control unit 50 is configured to specify the target flow rate Qt of fuel to the predetermined target flow rate Qt1 and to start supplying the fuel, and the adsorption state determination portion (S208) determines that the adsorption state of fuel at the first adsorption portion 42b1 is in the predetermined state in a case where the actual flow rate Qr serving as a flow rate detected by the flow sensor 42d every first predetermined time T1 from the start of fuel supply is equal to or greater than the second predetermined flow rate Q2. Accordingly, whether or not the adsorption state of fuel at the first adsorption portion 42b1 is in the predetermined state is securely determinable by a simple method before the start-up operation of the fuel cell system is started, thereby promptly and stably starting the start-up operation of the fuel cell system.

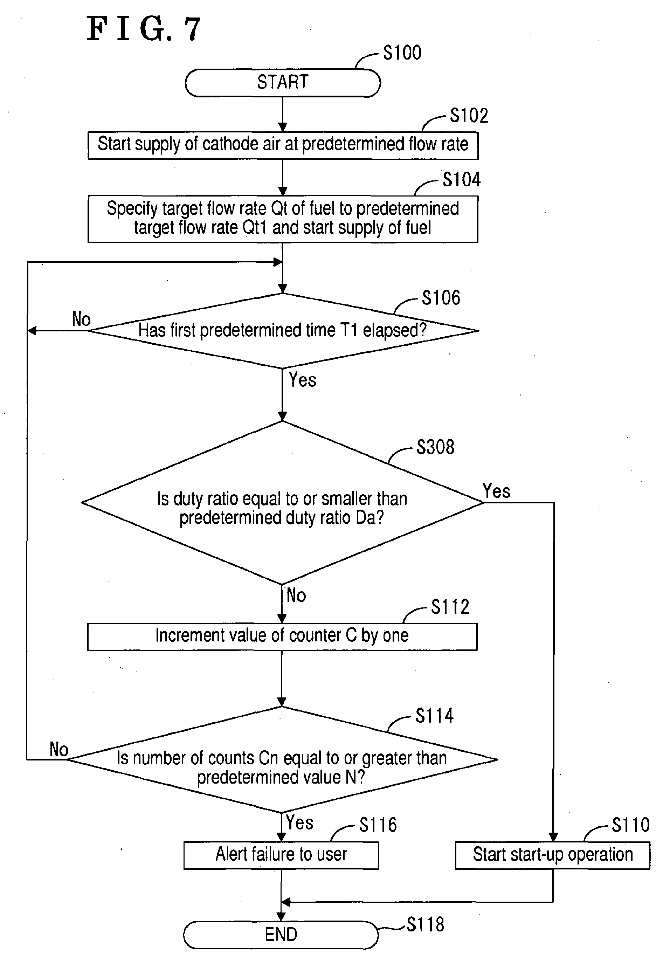

A third embodiment of the fuel cell system is explained. The explanation mainly includes a different portion of the third embodiment from the first embodiment. The substantially same structures and configurations of the third embodiment as those of the first embodiment bear the same reference numerals. In the third embodiment, the control unit 50 executes program illustrated in Fig. 7 instead of program illustrated in Fig. 4 in the first embodiment.

In the third embodiment, in order to determine whether or not the adsorption state of fuel at the adsorption portions 42b1 and 42c1 is in the predetermined state, it is determined whether or not a duty ratio in the PWM control serving as a control command value for the fuel pump 42f on which the feedback control is performed is equal to or smaller than a predetermined duty ratio Da in S308 serving as the adsorption state determination portion. The predetermined duty ratio Da serving as a predetermined control command value is specified to be greater than a duty ratio corresponding to the predetermined target flow rate Qt1 in a case where the adsorption state of fuel at the adsorption portions 42b1 and 42c1 is in the predetermined state. In addition, the predetermined duty ratio Da is specified so that the adsorption state of fuel at the adsorption portions 42b1 and 42c1 is in the predetermined state in a case where the duty ratio during the feedback control of the fuel pump 42f is equal to or smaller than the predetermined duty ratio Da. At this time, when the target flow rate Qt is specified to the predetermined target flow rate Qt1 to start the supply of fuel to the fuel pump 42f, the relatively large amount of fuel is adsorbed at the adsorption agents at the start of fuel supply. Thus, the actual flow rate Qr is relatively small. Accordingly, the difference between the actual flow rate Qr and the predetermined target flow rate Qt1 is relatively large, which results in a relatively large duty ratio. Afterwards, the fuel is adsorbed at the adsorption agents so that the adsorption amount of fuel at the adsorption agents increases, which increases the actual flow rate Qr. Because the difference between the actual flow rate Or and the predetermined target flow rate Qt1 decreases, the duty ratio at this time is smaller than the duty ratio at the start of fuel supply. In a case where the duty ratio becomes equal to or smaller than the predetermined duty ratio Da, the ratio of the adsorption amount of fuel at the adsorption portions 42b1 and 42c1 relative to the saturated adsorption amount is equal to or greater than the second predetermined ratio. In addition, the actual flow rate Qr is greater than the required flow rate Qn. In this case, because the adsorption state of fuel at the adsorption portions 42b1 and 42c1 is in the predetermined state, the control unit 50 determines YES in S308 and starts the start-up operation of the fuel cell system in S110.

In the third embodiment, the supply of fuel is started by specifying the target flow rate Qt of fuel to the predetermined target flow rate Qt1, and the adsorption state determination portion compares the duty ratio for the fuel pump 42f and the predetermined duty ratio Da every first predetermined time T1 from the aforementioned start of fuel supply and determines that the adsorption state of fuel at the first adsorption portion 42b1 is in the predetermined state in a case where the duty ratio for the fuel pump 42f is equal to or smaller than the predetermined duty ratio Da. Accordingly, whether or not the adsorption state of fuel at the first adsorption portion 42b1 is in the predetermined state is securely determinable by a simple method before the start-up operation of the fuel cell system is started, thereby promptly and stably starting the start-up operation of the fuel cell system.

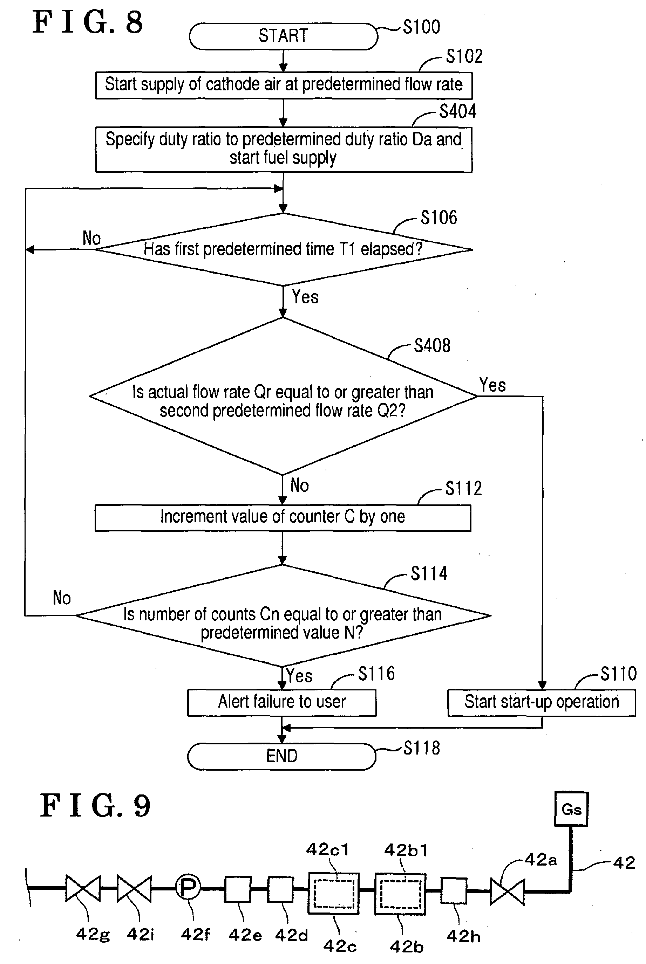

A fourth embodiment of the fuel cell system is explained. The explanation mainly includes a different portion of the fourth embodiment from the first embodiment. The substantially same structures and configurations of the fourth embodiment as those of the first embodiment bear the same reference numerals. In the fourth embodiment, the control unit 50 executes program illustrated in Fig. 8 instead of program illustrated in Fig. 4 in the first embodiment.

In the first embodiment, the control unit 50 specifies the target flow rate Qt to the predetermined target flow rate Qt1 and starts the fuel supply in S104. On the other hand, in the fourth embodiment, the control unit 50 specifies the duty ratio in the PWM control serving as the control command value for the fuel pump 42f to the predetermined duty ratio Da and starts the fuel supply in S404. At this time, the control unit 50 drives the fuel pump 42f at the predetermined duty ratio Da while not performing the feedback control on the fuel pump 42f. In the fourth embodiment, in order to determine whether or not the adsorption state of fuel at the adsorption portions 42b1 and 42c1 is in the predetermined state, the control unit 50 determines whether or not the actual flow rate Qr is equal to or greater than the second predetermined flow rate Q2 in S408 serving as the adsorption state determination portion. At this time, in a case where the actual flow rate Qr becomes equal to or greater than the second predetermined flow rate Q2 when the control unit 50 drives the fuel pump 42f at the predetermined duty ratio Da while not performing the feedback control on the fuel pump 42f to supply the fuel, the adsorption state of fuel at the adsorption agents is specified to be in the predetermined state.

In a case where the control unit 50 drives the fuel pump 42f at the predetermined duty ratio Da while not performing the feedback control on the fuel pump 42f to supply the fuel, the relatively large amount of fuel is adsorbed at each of the adsorption agents at the start of fuel supply, which leads to the actual flow rate Qr being smaller than the second predetermined flow rate Q2. Thereafter, the fuel is increasingly adsorbed at the adsorption agents so that the adsorption amount of fuel at the adsorption agents increases. In consequence, the actual flow rate Qr increases and reaches or exceeds the second predetermined flow rate Q2. At this time, the ratio of the adsorption amount of fuel at the adsorption portions 42b1 and 42c1 relative to the saturated adsorption amount is equal to or greater than the second predetermined ratio and also the actual flow rate Qr is greater than the required flow rate Qn. In this case, the adsorption state of fuel at the adsorption portions 42b1 and 42c1 is in the predetermined state and therefore the control unit determines YES in S408. The control unit 50 starts the start-up operation of the fuel cell system accordingly in S110 serving as the start-up operation start portion.

In the fourth embodiment, the supply of fuel is started by the fuel pump 42f by specifying the control command value for the fuel pump 42f to the predetermined duty ratio Da and the adsorption state determination portion determines that the adsorption state of fuel at the first adsorption portion 42b1 is in the predetermined state in a case where the actual flow rate Qr serving as a flow rate detected by the flow sensor 42d every first predetermined time T1 from the start of fuel supply becomes equal to or greater than the second predetermined flow rate Q2. Accordingly, whether or not the adsorption state of fuel at the first adsorption portion 42b1 is in the predetermined state is securely determinable by a simple method before the start-up operation of the fuel cell system is started, thereby promptly and stably starting the start-up operation of the fuel cell system.

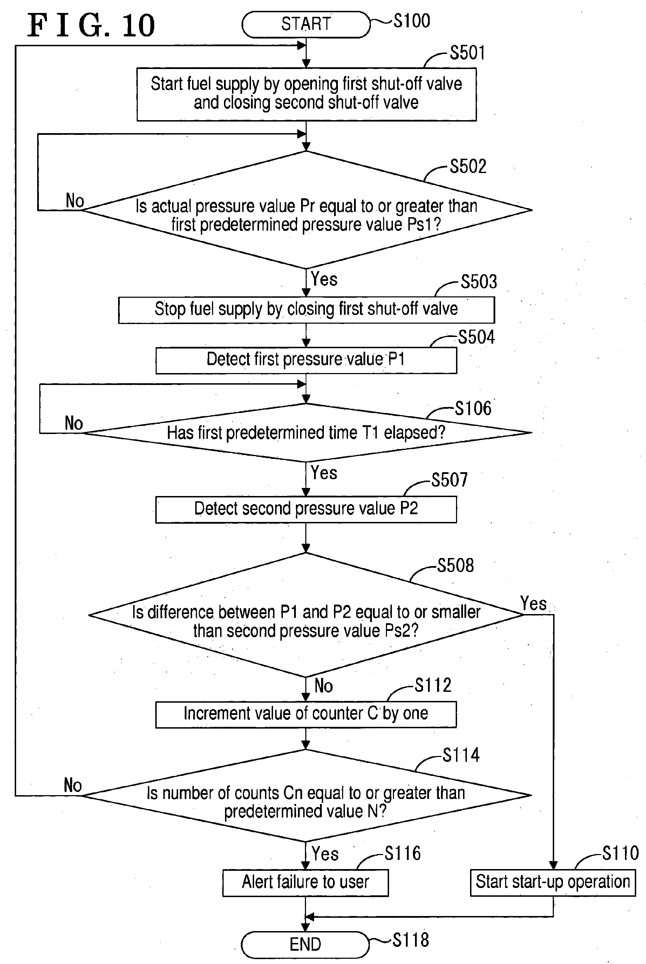

A fifth embodiment of the fuel cell system is explained. The explanation mainly includes a different portion of the fifth embodiment from the first embodiment. The substantially same structures and configurations of the fifth embodiment as those of the first embodiment bear the same reference numerals. In the fifth embodiment as illustrated in Fig. 9, the fuel cell system further includes a pressure sensor 42h serving as a pressure detection device and a second shut-off valve 42i serving as a second fuel valve. The pressure sensor 42h is disposed between the first shut-off valve 42a and the second shut-off valve 42i at the fuel supply pipe 42. Specifically, the pressure sensor 42h is disposed between the first shut-off valve 42a and the first desulfurizer 42b. The pressure sensor 42h detects a pressure value of fuel at a portion where the pressure sensor 42h is placed. An actual pressure value Pr serving as the pressure value detected by the pressure sensor 42h is transmitted as a detection signal to the control unit 50. The second shut-off valve 42i is disposed between the first desulfurizer 42b and the fuel electrode. Specifically, the second shut-off valve 42i is disposed between the fuel pump 42f and the check valve 42g. The second shut-off valve 42i selectively opens and closes the fuel supply pipe 42 to allow and prohibits the flow of fuel therethrough. In the fifth embodiment, the control unit 50 executes program illustrated in Fig. 10 instead of program in Fig. 4 executed in the first embodiment.

In the first embodiment, the control unit 50 starts the supply of cathode air in S102 and specifies the target flow rate Qt to the predetermined target flow rate Qt1 to start the supply of fuel in S104. On the other hand, in the fifth embodiment, the control unit 50 does not supply the cathode air and starts the fuel supply in a state where the first shut-off valve 42a is opened and the second shut-off valve 42i is closed in S501. Specifically, the control unit 50 opens the first shut-off valve 42a so that the fuel is introduced to the fuel supply pipe 42 by the pressure of the supply source Gs. At this time, the second shut-off valve 42i is closed, which increases the actual pressure value Pr. The control unit 50 then determines whether or not the actual pressure value Pr becomes equal to or greater than a first predetermined pressure value Ps1 in S502. The first predetermined pressure value Ps1 corresponds to the actual pressure value Pr equal to or greater than a third predetermined ratio relative to the pressure of the supply source Gs. The third predetermined ratio corresponds to 90%, for example.

The control unit 50 determines NO in S502 in a case where the actual pressure value Pr is smaller than the first predetermined pressure value Ps1 and the determination in S502 is repeatedly performed. On the other hand, in a case where the actual pressure value Pr reaches the first predetermined pressure value Ps1, the control unit 50 determines YES in S502 to close the first shut-off valve 42a to thereby stop the fuel supply in S503. The control unit 50 detects a first pressure value P1 serving as the actual pressure value Pr at a point at which the first shut-off valve 42a is closed to stop the fuel supply in S504.

In the fifth embodiment, in order to determine whether or not the adsorption state of fuel at the adsorption portions 42b1 and 42c1 is in the predetermined state, the control unit 50 detects a second pressure value P2 serving as the actual pressure value Pr at a point at which the first predetermined time T1 has elapsed from the point at which the fuel supply is stopped (i.e., from the stop of fuel supply) in S507. The control unit 50 then determines whether or not the difference between the first pressure value P1 and the second pressure value P2 (i.e., difference obtained by subtracting the second pressure value P2 from the first pressure value P1, for example) is equal to or smaller than a second predetermined pressure value Ps2 serving as a predetermined pressure value in S508 serving as the adsorption state determination portion. The second predetermined pressure value Ps2 is specified so that the adsorption state of fuel at the adsorption portions 42b1 and 42c1 is in the predetermined state when the difference between the first pressure value P1 and the second pressure value P2 is equal to or smaller than the second predetermined pressure value Ps2. At this time, because the fuel is adsorbed at the adsorption agents after the first shut-off valve 42a is closed and the fuel supply is stopped, the actual pressure value Pr decreases. In a case where the adsorption amount of fuel at the adsorption agents is relatively small at the time of elapse of the first predetermined time T1 from the stop of fuel supply, the difference between the first pressure value P1 and the second pressure value P2 is greater than the second predetermined pressure value Ps2. In this case, when the number of counts Cn is smaller than the predetermine value N (in S508, S112, S114), program returns to S501 to again supply the fuel.

Thereafter, the control unit 50 determines whether or not the adsorption state of fuel at the adsorption portions 42b1 and 42c1 is in the predetermined state in S508 at the time of elapse of the first predetermined time T1 after the first shut-off valve 42a is again closed to thereby again stop the fuel supply in S502 and S503. Accordingly, the control unit 50 repeatedly supplies the fuel, until the number of counts Cn reaches the predetermined value N and repeatedly determines whether or not the adsorption state of fuel at the adsorption portions 42b1 and 42c1 is in the predetermined state. At this time, in a case where the difference between the first pressure value P1 and the second pressure value P2 becomes equal to or smaller than the second predetermined pressure value Ps2 before the number of counts Cn reaches the predetermined value N because of the increase of adsorption amount of fuel at the adsorption agents resulting from the continuous fuel supply, the ratio of the adsorption amount of fuel at the adsorption portions 42b1 and 42c1 relative to the saturated absorption amount is equal to or greater than the second predetermined ratio. In this case, the adsorption state of fuel at the adsorption portions 42b1 and 42c1 is in the predetermined state and thus the control unit 50 determines YES in S508. The control unit 50 thus starts the start-up operation of the fuel cell system in S110 serving as the start-up operation start portion. On the other hand, in a case where the number of counts Cn reaches or exceeds the predetermined value N, the difference between the first pressure value P1 and the second pressure value P2 is maintained to be greater than the second predetermined pressure value Ps2 regardless of the repeated fuel supply so as to bring the adsorption state of fuel at the adsorption portions 42b1 and 42c1 to the predetermined state. Thus, the control unit 50 determines an occurrence of a failure such as fuel leakage, for example. The control unit 50 determines YES in S114 to alert the failure to a user in S116 serving as the warning portion.

In the fifth embodiment, the fuel cell system further includes the second shut-off valve 42i disposed between the second desulfurizer 42c (the first desulfurizer 42b) and the fuel electrode and selectively opened and closed for allowing and prohibiting the flow of fuel, and the pressure sensor 42h disposed between the first shut-off valve 42a and the second shut-off valve.42i to detect a pressure value of fuel at a portion where the pressure sensor 42h is disposed. The control unit 50 is configured to supply the fuel in a state where the first shut-off valve 42a is opened and the second shut-off valve 42i is closed and thereafter to stop the supply of fuel in a state where the first shut-off valve 42a is closed, the control unit 50 detecting the first pressure value P1 by the pressure sensor 42h at the time of the stop of fuel supply and detecting the second pressure value P2 by the pressure sensor 42h when the first predetermined time T1 has elapsed from the stop of fuel supply. The adsorption state determination portion (S508) calculates a difference between the first pressure value P1 and the second pressure value P2 every first predetermined time T1 from the stop of the fuel supply after the supply of the fuel and determines that the adsorption state of fuel at the first adsorption portion 42b1 is in the predetermined state in a case where the difference is equal to or smaller than the second predetermined pressure value Ps2.

Accordingly, whether or not the adsorption state of fuel at the first adsorption portion 42b1 is in the predetermined state is securely determinable by a simple method before the start-up operation of the fuel cell system is started, thereby promptly and stably starting the start-up operation of the fuel cell system.

In addition, the control unit 50 includes the warning portion (S116) that issues a warning to a user in a case where the adsorption state determination portion (S508) determines that the adsorption state of fuel at the first adsorption portion 42b1 fails to be in the predetermined state when the number of calculations of the difference between the first pressure value P1 and the second pressure value P2 reaches the predetermined value (N). Accordingly, in a case where the adsorption state determination portion determines that the adsorption state of fuel at the first adsorption portion 42b1 is not in the predetermined state, i.e., fails to be in the predetermined state, when the number of calculations of the difference between the first pressure value P1 and the second pressure value P2 (i.e., the number of counts Cn) by the adsorption state determination portion reaches the predetermined value N, the control unit 50 determines an occurrence of a failure such as fuel leakage to alert the failure to a user. In consequence, the control unit 50 informs a user of an occurrence of a failure such as fuel leakage, for example, before the start of the start-up operation of the fuel cell system.

The fuel cell system is not limited to include the aforementioned constructions and may be appropriately modified or changed. For example, in the first to fourth embodiments, in a case where the adsorption state determination portion determines that the adsorption state of fuel at the adsorption portions 42b1 and 42c1 is not in the predetermined state and the number of cunts Cn is smaller than the predetermined value N (in S114), the control unit 50 continues the fuel supply without changing the flow rate of fuel. Alternatively, the control unit 50 may control the flow rate of fuel to increase. As a result, the adsorption amount of fuel at each of the adsorption agents increases for a further reduced time period, so that the adsorption state of fuel at the adsorption portions 42b1 and 42c1 is brought to the predetermined state for a further reduced time period. The start-up operation of the fuel cell system may be started for a further reduced time period after the program is executed.

In addition, in the fifth embodiment, the control unit 50 determines whether or not the actual pressure value Pr is equal to or greater than the first predetermined pressure value Ps1 in S502. Alternatively, the control unit 50 may determine whether or not a third predetermined time has elapsed. The third predetermined time is, for example, one minute. Further, in the fifth embodiment, the control unit 50 supplies the fuel to the fuel supply pipe 42 by the pressure of the supply source Gs in S501. Alternatively, the control unit 50 may supply the fuel by the fuel pump 42f. In this case, because the number of counts Cn is smaller than the predetermined value N (in S114), the control unit 50 may control the fuel pump 42f to increase the flow rate of fuel when again starting the fuel supply. Furthermore, in the fifth embodiment, the second shut-off valve 42i serves as the second fuel valve. Alternatively, the second shut-off valve 42i may be omitted and the check valve 42g may serve as the second fuel valve.

Furthermore, in each of the embodiments, the first desulfurizer 42b serves as the adsorption device. Alternatively, the second desulfurizer 42c, or the first and second desulfurizers 42b and 42c may serve as the adsorption device(s). The fuel cell system includes the first and second desulfurizers 42b and 42c as the desulfurizers. Alternatively, the fuel cell system may include either the first desulfurizer 42b or the second desulfurizer 42c. The fuel cell 34a may be a polymer electrolyte fuel cell instead of a solid oxide fuel cell.
A fuel cell system includes a fuel cell (34a) including a fuel electrode supplied with a fuel to which an odorant is added and an oxidant electrode supplied with an oxidant gas, an adsorption device (42b) disposed between a supply source (Gs) and the fuel electrode and including an adsorption portion (42b1) which is configured to adsorb the odorant and the fuel, and a control unit (50) controlling at least the fuel cell (34a) and supplying the fuel before a start-up operation of the fuel cell system is started and including an adsorption state determination portion (S108, S208, S308, S408, S508) determining whether or not an adsorption state of the fuel at the adsorption portion (42b1) is in a predetermined state and a start-up operation start portion (S110) starting the start-up operation in a case where the adsorption state determination portion (S108, S208, S308, S408, S508) determines the predetermined state.

## Claims

1. A fuel cell system comprising:
a fuel cell (34a) including a fuel electrode supplied with a fuel to which an odorant is added, the fuel being directly supplied or supplied after reformed to the fuel electrode from a supply source (Gs), the fuel cell (34a) including an oxidant electrode supplied with an oxidant gas, the fuel cell (34a) generating an electric power from the fuel and the oxidant gas;
an adsorption device (42b) disposed between the supply source (Gs) and the fuel electrode and including an adsorption portion (42b1) which is configured to adsorb the odorant and the fuel; **characterized by**
a control unit (50) controlling at least the fuel cell (34a);
the control unit (50) including an adsorption state determination portion (S108, S208, S308, S408, S508) determining whether or not an adsorption state of the fuel at the adsorption portion (42b1) is in a predetermined state by supplying the fuel before a start-up operation of the fuel cell system has started, and
the control unit (50) including a start-up operation start portion (S110) starting the start-up operation of the fuel cell system in a case where the adsorption state determination portion (S108, S208, S308, S408, S508) determines that the adsorption state of the fuel at the adsorption portion (42b1) is in the predetermined state.

2. The fuel cell system according to claim 1, further comprising a fuel supply device (42f) disposed between the supply source (Gs) and the fuel electrode to supply the fuel, and a flow rate detection device (42d) disposed between the adsorption device (42b) and the fuel electrode to detect a flow rate of the fuel, wherein
the control unit (50) includes a feedback control portion (51) performing a feedback control by calculating a control command value for the fuel supply device (42f) to output the control command value to the fuel supply device (42f) so that a flow rate (Qr) of the fuel detected by the flow rate detection device (42d) becomes equal to a target flow rate (Qt) of the fuel,
the control unit (50) is configured to specify the target flow rate (Qt) to a predetermined target flow rate (Qt1) of the fuel and to start supplying the fuel, and
the adsorption state determination portion (S108) determines that the adsorption state of the fuel at the adsorption portion (42b1) is in the predetermined state in a case where a difference between a flow rate (Qr) of the fuel detected by the flow rate detection device (42d) every first predetermined time (T1) from the start of the fuel supply and the predetermined target flow rate (Qt1) is equal to or smaller than a first predetermined flow rate (Q1).

3. The fuel cell system according to claim 1, further comprising a fuel supply device (42f) disposed between the supply source (Gs) and the fuel electrode to supply the fuel, and a flow rate detection device (42d) disposed between the adsorption device (42b) and the fuel electrode to detect a flow rate of the fuel, wherein
the control unit (50) includes a feedback control portion (51) performing a feedback control by calculating a control command value for the fuel supply device (42f) to output the control command value to the fuel supply device (42f) so that a flow rate (Qr) of the fuel detected by the flow rate detection device (42d) becomes equal to a target flow rate (Qt) of the fuel,
the control unit (50) is configured to specify the target flow rate (Qt) to a predetermined target flow rate (Qt1) of the fuel and to start supplying the fuel, and
the adsorption state determination portion (S208) determines that the adsorption state of the fuel at the adsorption portion (42b1) is in the predetermined state in a case where a flow rate (Qr) of the fuel detected by the flow rate detection device (42d) every first predetermined time (T1) from the start of the fuel supply is equal to or greater than a second predetermined flow rate (Q2).

4. The fuel cell system according to claim 1, further comprising a fuel supply device (42f) disposed between the supply source (Gs) and the fuel electrode to supply the fuel, and a flow rate detection device (42d) disposed between the adsorption device (42b) and the fuel electrode to detect a flow rate of the fuel, wherein
the control unit (50) includes a feedback control portion (51) performing a feedback control by calculating a control command value for the fuel supply device (42f) to output the control command value to the fuel supply device (42f) so that a flow rate (Qr) of the fuel detected by the flow rate detection device (42d) becomes equal to a target flow rate (Qt) of the fuel,
the control unit (50) is configured to specify the target flow rate (Qt) to a predetermined target flow rate (Qt1) of the fuel and to start supplying the fuel, and
the adsorption state determination portion (S308) compares the control command value and a predetermined control command value (Da) every first predetermined time (T1) from the start of the fuel supply and determines that the adsorption state of the fuel at the adsorption portion (42b1) is in the predetermined state in a case where the control command value is equal to or smaller than the predetermined control command value (Da).

5. The fuel cell system according to claim 1, further comprising a fuel supply device (42f) disposed between the supply source (Gs) and the fuel electrode to supply the fuel, and a flow rate detection device (42d) disposed between the adsorption device (42b) and the fuel electrode to detect a flow rate of the fuel, wherein
the control unit (50) is configured to specify a control command value for the fuel supply device (42f) to a predetermined control command value (Da) and to start supplying the fuel by the fuel supply device (42f), and
the adsorption state determination portion (S408) determines that the adsorption state of the fuel at the adsorption portion (42b1) is in the predetermined state in a case where a flow rate (Qr) of the fuel detected by the flow rate detection device (42d) every first predetermined time (T1) from the start of the fuel supply is equal to or greater than a second predetermined flow rate (Q2).

6. The fuel cell system according to any one of claims 2 through 5, wherein the control unit (50) includes a warning portion (S116) that issues a warning to a user in a case where the adsorption state determination portion (S108, S208, S308, S408) determines that the adsorption state of the fuel at the adsorption portion (42b1) fails to be in the predetermined state when a second predetermined time (T2) has elapsed from the start of the fuel supply, the second predetermined time (T2) being longer than the first predetermined time (T1).

7. The fuel cell system according to claim 1, further comprising:
a first fuel valve (42a) disposed between the supply source (Gs) and the adsorption device (42b) and selectively opened and closed for allowing and prohibiting a flow of the fuel;
a second fuel valve (42i) disposed between the adsorption device (42b) and the fuel electrode and selectively opened and closed for allowing and prohibiting the flow of the fuel; and
a pressure detection device (42h) disposed between the first fuel valve (42a) and the second fuel valve (42i) to detect a pressure value of the fuel at a portion where the pressure detection device (42h) is disposed, wherein
the control unit (50) is configured to supply the fuel in a state where the first fuel valve (42a) is opened and the second fuel valve (42i) is closed and thereafter to stop the supply of the fuel in a state where the first fuel valve (42a) is closed, the control unit (50) detecting a first pressure value (P1) by the pressure detection device (42h) at the time of the, stop of the fuel supply and detecting a second pressure value (P2) by the pressure detection device (42h) when a first predetermined time (T1) has elapsed from the stop of the fuel supply, and
the adsorption state determination portion (S508) calculates a difference between the first pressure value (P1) and the second pressure value (P2) every first predetermined time (T1) from the stop of the fuel supply after the supply of the fuel and determines that the adsorption state of the fuel at the adsorption portion (42b1) is in the predetermined state in a case where the difference is equal to or smaller than a predetermined pressure value (Ps2).

8. The fuel cell system according to claim 7, wherein the control unit (50) includes a warning portion (S116) that issues a warning to a user in a case where the adsorption state determination portion (S508) determines that the adsorption state of the fuel at the adsorption portion (42b1) fails to be in the predetermined state when the number of calculations of the difference between the first pressure value (P1) and the second pressure value (P2) reaches a predetermined value (N).

9. The fuel cell system according to any one of claims 1 through 8, wherein the predetermined state is a state in which a ratio of an adsorption amount of the fuel at the adsorption portion (42b1) relative to a saturated adsorption amount of the fuel is 80% or greater.

10. The fuel cell system according to any one of claims 1 through 9, wherein the fuel is a gas of which major component is hydrocarbon including a carbon number of 3 or more.

## Patentansprüche

1. Brennstoffzellensystem mit
einer Brennstoffzelle (34a) mit einer Brennstoffelektrode, die mit einem Brennstoff versorgt ist, dem ein Odoriermittel hinzugefügt ist, wobei die Brennstoffelektrode von einer Versorgungsquelle (Gs) mit dem Brennstoff direkt versorgt wird oder nachdem dieser reformiert wurde, wobei die Brennstoffzelle (34a) eine mit einem Oxidationsmittelgas versorgte Oxidationselektrode umfasst, wobei die Brennstoffzelle (34a) eine elektrische Leistung aus dem Brennstoff und dem Oxidationsmittelgas erzeugt;
einer Adsorptionsvorrichtung (42b), die zwischen der Versorgungsquelle (Gs) und der Brennstoffelektrode angeordnet ist und einen Adsorptionsabschnitt (42b1) umfasst, der eingerichtet ist, das Odoriermittel und den Brennstoff zu adsorbieren; **gekennzeichnet durch**
eine Steuerungseinheit (50), die mindestens die Brennstoffzelle (34a) steuert;
wobei die Steuerungseinheit (50) einen Adsorptionszustandsbestimmungsabschnitt (S108, S208, S308, S408, S508) umfasst, der bestimmt, ob ein Adsorptionszustand des Brennstoffs an dem Adsorptionsabschnitt (42b1) in einem vorbestimmten Zustand ist oder nicht, indem er den Brennstoff zuführt, bevor ein Anfahrbetrieb des Brennstoffzellensystems gestartet ist, und
die Steuerungseinheit (50) einen Anfahrbetriebsstartabschnitt (S110) umfasst, der den Anfahrbetrieb des Brennstoffzellensystems in einem Fall startet, in dem der Adsorptionszustandsbestimmungsabschnitt (S108, S208, S308, S408, S508) bestimmt, dass der Adsorptionszustand des Brennstoffs an dem Adsorptionsabschnitt (42b1) in dem vorbestimmten Zustand ist.

2. Brennstoffzellensystem nach Anspruch 1, ferner mit einer Brennstoffversorgungsvorrichtung (42f), die zwischen der Versorgungsquelle (Gs) und der Brennstoffelektrode angeordnet ist, um den Brennstoff zuzuführen, sowie einer Durchsatzerfassungsvorrichtung (42d), die zwischen der Adsorptionsvorrichtung (42b) und der Brennstoffelektrode angeordnet ist, um einen Durchsatz des Brennstoffs zu erfassen, wobei
die Steuerungseinheit (50) einen Regelungsabschnitt (51) umfasst, der eine Regelung durchführt, indem er einen Steuerungssollwert für die Brennstoffversorgungsvorrichtung (42f) berechnet, um den Steuerungssollwert an die Brennstoffversorgungsvorrichtung (42f) auszugeben, sodass ein durch die Durchsatzerfassungsvorrichtung (42d) erfasster Durchsatz (Qr) des Brennstoffs gleich einem Zieldurchsatz (Qt) des Brennstoffs wird,
die Steuerungseinheit (50) eingerichtet ist, den Zieldurchsatz (Qt) auf einen vorbestimmten Zieldurchsatz (Qt1) des Brennstoffs festzulegen und die Versorgung des Brennstoffs zu starten, und
der Adsorptionszustandsbestimmungsabschnitt (S108) bestimmt, dass der Adsorptionszustand des Brennstoffs an dem Adsorptionsabschnitt (42b1) in dem vorbestimmten Zustand ist, in einem Fall, in dem eine Differenz zwischen einem Durchsatz (Qr) des Brennstoffs, der durch die Durchsatzerfassungsvorrichtung (42d) zu jeder ersten vorbestimmten Zeit (T1) seit dem Start der Brennstoffversorgung erfasst ist, und dem vorbestimmten Zieldurchsatz (Qt1) gleich ist wie oder kleiner ist als ein erster vorbestimmter Durchsatz (Q1).

3. Brennstoffzellensystem nach Anspruch 1, ferner mit einer Brennstoffversorgungsvorrichtung (42f), die zwischen der Versorgungsquelle (Gs) und der Brennstoffelektrode angeordnet ist, um den Brennstoff zuzuführen, sowie einer Durchsatzerfassungsvorrichtung (42d), die zwischen der Adsorptionsvorrichtung (42b) und der Brennstoffelektrode angeordnet ist, um einen Durchsatz des Brennstoffs zu erfassen, wobei
die Steuerungseinheit (50) einen Regelungsabschnitt (51) umfasst, der eine Regelung durchführt, indem er einen Steuerungssollwert für die Brennstoffversorgungsvorrichtung (42f) berechnet, um den Steuerungssollwert an die Brennstoffversorgungsvorrichtung (42f) auszugeben, sodass ein durch die Durchsatzerfassungsvorrichtung (42d) erfasster Durchsatz (Qr) des Brennstoffs gleich einem Zieldurchsatz (Qt) des Brennstoffs wird,
die Steuerungseinheit (50) eingerichtet ist, den Zieldurchsatz (Qt) auf einen vorbestimmten Zieldurchsatz (Qt1) des Brennstoffs festzulegen und die Versorgung des Brennstoffs zu starten, und
der Adsorptionszustandsbestimmungsabschnitt (S208) bestimmt, dass der Adsorptionszustand des Brennstoffs an dem Adsorptionsabschnitt (42b1) in dem vorbestimmten Zustand ist, in einem Fall, in dem ein Durchsatz (Qr) des Brennstoffs, der durch die Durchsatzerfassungsvorrichtung (42d) zu jeder ersten vorbestimmten Zeit (T1) seit dem Start der Brennstoffversorgung erfasst ist, gleich ist wie oder größer ist als ein zweiter vorbestimmter Durchsatz (Q2).

4. Brennstoffzellensystem nach Anspruch 1, ferner mit einer Brennstoffversorgungsvorrichtung (42f), die zwischen der Versorgungsquelle (Gs) und der Brennstoffelektrode angeordnet ist, um den Brennstoff zuzuführen, sowie einer Durchsatzerfassungsvorrichtung (42d), die zwischen der Adsorptionsvorrichtung (42b) und der Brennstoffelektrode angeordnet ist, um einen Durchsatz des Brennstoffs zu erfassen, wobei
die Steuerungseinheit (50) einen Regelungsabschnitt (51) umfasst, der eine Regelung durchführt, indem er einen Steuerungssollwert für die Brennstoffversorgungsvorrichtung (42f) berechnet, um den Steuerungssollwert an die Brennstoffversorgungsvorrichtung (42f) auszugeben, sodass ein durch die Durchsatzerfassungsvorrichtung (42d) erfasster Durchsatz (Qr) des Brennstoffs gleich einem Zieldurchsatz (Qt) des Brennstoffs wird,
die Steuerungseinheit (50) eingerichtet ist, den Zieldurchsatz (Qt) auf einen vorbestimmten Zieldurchsatz (Qt1) des Brennstoffs festzulegen und die Versorgung des Brennstoffs zu starten, und
der Adsorptionszustandsbestimmungsabschnitt (S308) den Steuerungssollwert und einen vorbestimmten Steuerungssollwert (Da) zu jeder ersten vorbestimmten Zeit (T1) seit dem Start der Brennstoffversorgung vergleicht und bestimmt, dass der Adsorptionszustand des Brennstoffs an dem Adsorptionsabschnitt (42b1) in dem vorbestimmten Zustand ist, in einem Fall, in dem der Steuerungssollwert gleich ist wie oder kleiner ist als der vorbestimmte Steuerungssollwert (Da).

5. Brennstoffzellensystem nach Anspruch 1, ferner mit einer Brennstoffversorgungsvorrichtung (42f), die zwischen der Versorgungsquelle (Gs) und der Brennstoffelektrode angeordnet ist, um den Brennstoff zuzuführen, sowie einer Durchsatzerfassungsvorrichtung (42d), die zwischen der Adsorptionsvorrichtung (42b) und der Brennstoffelektrode angeordnet ist, um einen Durchsatz des Brennstoffs zu erfassen, wobei
die Steuerungseinheit (50) eingerichtet ist, den Steuerungssollwert für die Brennstoffversorgungsvorrichtung (42f) auf einen vorbestimmten Steuerungssollwert (Da) festzulegen, und die Versorgung des Brennstoffs durch die Brennstoffversorgungsvorrichtung (42f) zu starten, und
der Adsorptionszustandsbestimmungsabschnitt (S208) bestimmt, dass der Adsorptionszustand des Brennstoffs an dem Adsorptionsabschnitt (42b1) in dem vorbestimmten Zustand ist, in einem Fall, in dem ein Durchsatz (Qr) des Brennstoffs, der durch die Durchsatzerfassungsvorrichtung (42d) zu jeder ersten vorbestimmten Zeit (T1) seit dem Start der Brennstoffversorgung erfasst ist, gleich ist wie oder größer ist als ein zweiter vorbestimmter Durchsatz (Q2).

6. Brennstoffzellensystem nach einem der Ansprüche 2 bis 5, wobei die Steuerungseinheit (50) einen Warnabschnitt (S116) umfasst, der eine Warnung an einen Nutzer in einem Fall ausgibt, in dem der Adsorptionszustandsbestimmungsabschnitt (S108, S208, S308, S408) bestimmt, dass der Adsorptionszustand des Brennstoffs an dem Adsorptionsabschnitt (42b1) nicht in dem vorbestimmten Zustand ist, wenn eine zweite vorbestimmte Zeit (T2) seit dem Start der Brennstoffversorgung verstrichen ist, wobei die zweite vorbestimmte Zeit (T2) länger ist als die erste vorbestimmte Zeit (T1).

7. Brennstoffzellensystem nach Anspruch 1, ferner mit
einem ersten Brennstoffventil (42a), das zwischen der Versorgungsquelle (Gs) und der Adsorptionsvorrichtung (42b) angeordnet ist und wahlweise geöffnet und geschlossen werden kann, um einen Durchfluss des Brennstoffs zuzulassen und zu verhindern;
einem zweiten Brennstoffventil (42i), das zwischen der Adsorptionsvorrichtung (42b) und der Brennstoffelektrode angeordnet ist und wahlweise geöffnet und geschlossen werden kann, um den Durchfluss des Brennstoffs zuzulassen und zu verhindern; und
einer Druckerfassungsvorrichtung (42h), die zwischen dem ersten Brennstoffventil (42a) und dem zweiten Brennstoffventil (42i) angeordnet ist, um einen Druckwert des Brennstoffs an einem Abschnitt zu erfassen, in dem die Druckerfassungsvorrichtung (42h) angeordnet ist, wobei
die Steuerungseinheit (50) eingerichtet ist, den Brennstoff in einem Zustand zuzuführen, in dem das erste Brennstoffventil (42a) geöffnet ist und das zweite Brennstoffventil (42i) geschlossen ist und danach die Versorgung des Brennstoffs in einem Zustand anzuhalten, in dem das erste Brennstoffventil (42a) geschlossen ist, wobei die Steuerungseinheit (50) einen ersten Druckwert (P1) durch die Druckerfassungsvorrichtung (42h) zu der Zeit des Anhaltens der Brennstoffversorgung erfasst und einen zweiten Druckwert (P2) durch die Druckerfassungsvorrichtung (42h) erfasst, wenn eine erste vorbestimmte Zeit (T1) seit dem Anhalten der Brennstoffversorgung verstrichen ist, und
der Adsorptionszustandsbestimmungsabschnitt (S508) eine Differenz zwischen dem ersten Druckwert (P1) und dem zweiten Druckwert (P2) zu jeder ersten vorbestimmten Zeit (T1) seit dem Anhalten der Brennstoffversorgung nach dem Zuführen des Brennstoffs berechnet und bestimmt, dass der Adsorptionszustand des Brennstoffs an dem Adsorptionsabschnitt (42b1) in dem vorbestimmten Zustand ist, in einem Fall, in dem die Differenz gleich einem vorbestimmten oder kleiner als ein vorbestimmter Druckwert (Ps2) ist.

8. Brennstoffzellensystem nach Anspruch 7, wobei die Steuerungseinheit (50) einen Warnabschnitt (S116) umfasst, der eine Warnung an den Nutzer in einem Fall ausgibt, in dem der Adsorptionszustandsbestimmungsabschnitt (S508) bestimmt, dass der Adsorptionszustand des Brennstoffs an dem Adsorptionsabschnitt (42b) nicht in dem vorbestimmten Zustand ist, wenn die Anzahl an Berechnungen der Differenz zwischen dem ersten Druckwert (P1) und dem zweiten Druckwert (P2) einen vorbestimmten Wert (N) erreicht.

9. Brennstoffzellensystem nach einem der Ansprüche 1 bis 8, wobei der vorbestimmte Zustand ein Zustand ist, in dem ein Verhältnis einer Adsorptionsmenge des Brennstoffs an dem Adsorptionsabschnitt (42b1) bezüglich einer gesättigten Adsorptionsmenge des Brennstoffs 80% oder größer ist.

10. Brennstoffzellensystem nach einem der Ansprüche 1 bis 9, wobei der Brennstoff ein Gas ist, dessen Hauptkomponente Kohlenwasserstoff mit einer Kohlenstoffzahl von 3 oder mehr ist.

## Revendications

1. Système de pile à combustible qui comprend :
une pile à combustible (34a) qui comprend une électrode à combustible alimentée avec un combustible auquel est ajouté un produit odorant, le combustible étant fourni directement ou étant fourni après avoir été reformé à l'électrode à combustible, par une source d'approvisionnement (Gs), la pile à combustible (34a) comprenant une électrode à oxydant alimentée avec un gaz oxydant, la pile à combustible (34a) générant de l'électricité à partir du combustible et du gaz oxydant ;
un dispositif d'adsorption (42b) disposé entre la source d'approvisionnement (Gs) et l'électrode à combustible, et qui comprend une partie d'adsorption (42b1) qui est configurée pour adsorber le produit odorant et le combustible ; **caractérisé par**
une unité de commande (50) qui contrôle au moins la pile à combustible (34a) ;
l'unité de commande (50) comprenant une partie de détermination d'état d'adsorption (S108, S208, S308, S408, S508) qui détermine si un état d'adsorption du combustible au niveau de la partie d'adsorption (42b1) est un état prédéterminé ou non, en fournissant le combustible avant une opération de démarrage du système de pile à combustible, et
l'unité de commande (50) comprenant une partie de lancement d'opération de démarrage (S110) qui lance l'opération de démarrage du système de pile à combustible lorsque la partie de détermination d'état d'adsorption (S108, S208, S308, S408, S508) détermine que l'état d'adsorption du combustible au niveau de la partie d'adsorption (42b1) est un état prédéterminé.

2. Système de pile à combustible selon la revendication 1, qui comprend en outre un dispositif d'alimentation en combustible (42f) disposé entre la source d'approvisionnement (Gs) et l'électrode à combustible afin de fournir le combustible, et un dispositif de détection de débit (42d) disposé entre le dispositif d'adsorption (42b) et l'électrode à combustible afin de détecter un débit du combustible, dans lequel
l'unité de commande (50) comprend une partie de contrôle de réaction (51) qui effectue un contrôle de réaction en calculant une valeur de commande de contrôle pour le dispositif d'alimentation en combustible (42f) afin de fournir la valeur de commande de contrôle au dispositif d'alimentation en combustible (42f) de sorte qu'un débit (Qr) du combustible détecté par le dispositif de détection de débit (42d) devienne égal à un débit cible (Qt) du combustible,
l'unité de commande (50) est configurée pour spécifier le débit cible (Qt) selon un débit prédéterminé (Qt1) du combustible, et pour lancer l'approvisionnement en combustible, et
la partie de détermination d'état d'adsorption (S108) détermine que l'état d'adsorption du combustible au niveau de la partie d'adsorption (42b1) est l'état prédéterminé lorsqu'une différence entre un débit (Qr) du combustible détecté par le dispositif de détection de débit (42d) à chaque premier moment (T1) à partir du lancement de l'alimentation en combustible et le débit cible prédéterminé (Qt1) est égale ou inférieure à un premier débit prédéterminé (Q1).

3. Système de pile à combustible selon la revendication 1, qui comprend en outre un dispositif d'alimentation en combustible (42f) disposé entre la source d'approvisionnement (Gs) et l'électrode à combustible afin de fournir le combustible, et un dispositif de détection de débit (42d) disposé entre le dispositif d'adsorption (42b) et l'électrode à combustible afin de détecter un débit du combustible, dans lequel
l'unité de commande (50) comprend une partie de contrôle de réaction (51) qui effectue un contrôle de réaction en calculant une valeur de commande de contrôle pour le dispositif d'alimentation en combustible (42f) afin de fournir la valeur de commande de contrôle au dispositif d'alimentation en combustible (42f) de sorte qu'un débit (Qr) du combustible détecté par le dispositif de détection de débit (42d) devienne égal à un débit cible (Qt) du combustible,
l'unité de commande (50) est configurée pour spécifier le débit cible (Qt) selon un débit cible prédéterminé (Qt1) du combustible, et pour lancer l'alimentation en combustible, et
la partie de détermination d'état d'adsorption (S208) détermine que l'état d'adsorption du combustible au niveau de la partie d'adsorption (42b1) est l'état prédéterminé lorsqu'un débit (Qr) du combustible détecté par le dispositif de détection de débit (42d) à chaque premier moment prédéterminé (T1) à partir du lancement de l'alimentation en combustible est égal ou supérieur à un second débit prédéterminé (Q2).

4. Système de pile à combustible selon la revendication 1, qui comprend en outre un dispositif d'alimentation en combustible (42f) disposé entre la source d'approvisionnement (Gs) et l'électrode à combustible afin de fournir le combustible, et un dispositif de détection de débit (42d) disposé entre le dispositif d'adsorption (42b) et l'électrode à combustible afin de détecter un débit du combustible, dans lequel
l'unité de commande (50) comprend une partie de contrôle de réaction (51) qui effectue un contrôle de réaction en calculant une valeur de commande de contrôle pour le dispositif d'alimentation en combustible (42f) afin de fournir la valeur de commande de contrôle au dispositif d'alimentation en combustible (42f) de sorte qu'un débit (Qr) du combustible détecté par le dispositif de détection de débit (42d) devienne égal à un débit cible (Qt) du combustible,
l'unité de commande (50) est configurée pour spécifier le débit cible (Qt) selon un débit cible prédéterminé (Qt1) du combustible, et pour lancer l'alimentation en combustible, et
la partie de détermination d'état d'adsorption (Q308) compare la valeur de commande de contrôle et une valeur de commande de contrôle prédéterminée (Da) à chaque premier moment prédéterminé (T1) à partir du lancement de l'alimentation en combustible, et détermine que l'état d'adsorption du combustible au niveau de la partie d'adsorption (42b1) est l'état prédéterminé lorsque la valeur de commande de contrôle est égale ou inférieure à la valeur de commande de contrôle prédéterminée (Da).

5. Système de pile à combustible selon la revendication 1, qui comprend en outre un dispositif d'alimentation en combustible (42f) disposé entre la source d'approvisionnement (Gs) et l'électrode à combustible afin de fournir le combustible, et un dispositif de détection de débit (42d) disposé entre le dispositif d'adsorption (42b) et l'électrode à combustible afin de détecter un débit du combustible, dans lequel
l'unité de commande (50) est configurée pour spécifier une valeur de commande de contrôle pour le dispositif d'alimentation en combustible (42f) selon une valeur de commande de contrôle prédéterminée (Da), et pour lancer l'alimentation en combustible par le dispositif d'alimentation en combustible (42f), et
la partie de détermination d'état d'adsorption (S408) détermine que l'état d'adsorption du combustible au niveau de la partie d'adsorption (42b1) est l'état prédéterminé lorsqu'un débit (Qr) du combustible détecté par le dispositif de détection de débit (42d) à chaque premier moment prédéterminé (T1) à partir du lancement de l'alimentation en combustible est égal ou supérieur à un second débit prédéterminé (Q2).

6. Système de pile à combustible selon l'une quelconque des revendications 2 à 5, dans lequel l'unité de commande (50) comprend une partie d'alerte (S116) qui délivre une alerte à un utilisateur lorsque la partie de détermination d'état d'adsorption (S108, S208, S308, S408) détermine que l'état d'adsorption du combustible au niveau de la partie d'adsorption (42b1) n'est pas l'état prédéterminé lorsqu'une seconde durée prédéterminée (T2) s'est écoulée depuis le lancement de l'alimentation en combustible, la seconde durée prédéterminée (T2) étant plus longue que la première durée prédéterminée (T1).

7. Système de pile à combustible selon la revendication 1, qui comprend en outre :
une première soupape de combustible (42a) disposée entre la source d'approvisionnement (Gs) et le dispositif d'adsorption (42b) et ouverte et fermée sélectivement afin de permettre et d'empêcher un écoulement du combustible ;
une seconde soupape de combustible (42i) disposée entre le dispositif d'adsorption (42b) et l'électrode à combustible et ouverte et fermée sélectivement afin de permettre et d'empêcher l'écoulement de combustible ; et
un dispositif de détection de pression (42h) disposé entre la première soupape de combustible (42a) et la seconde soupape de combustible (42i) afin de détecter une valeur de pression du combustible au niveau d'une partie au niveau de laquelle est disposé le dispositif de détection de pression (42h),
dans lequel
l'unité de commande (50) est configurée pour fournir le combustible dans un état dans lequel la première soupape de combustible (42a) est ouverte et la seconde soupape de combustible (42i) est fermée, puis pour arrêter l'alimentation en combustible lorsque la première soupape de combustible (42a) est fermée, l'unité de commande (50) détectant une première valeur de pression (P1) à l'aide du dispositif de détection de pression (42h) au moment de l'arrêt de l'alimentation en combustible, et détectant une seconde valeur de pression (P2) à l'aide du dispositif de détection de pression (42h) dès qu'une première durée prédéterminée (T1) s'est écoulée depuis l'arrêt de l'alimentation en combustible, et
la partie de détermination d'état d'adsorption (S508) calcule une différence entre la première valeur de pression (P1) et la seconde valeur de pression (P2) à chaque premier moment prédéterminé (T1) depuis l'arrêt de l'alimentation en combustible après l'alimentation en combustible, et détermine que l'état d'adsorption du combustible au niveau de la partie d'adsorption (42b1) est l'état prédéterminé lorsque la différence est égale ou inférieure à une valeur de pression prédéterminée (Ps2).

8. Système de pile à combustible selon la revendication 7, dans lequel l'unité de commande (50) comprend une partie d'alerte (S116) qui délivre une alerte à un utilisateur lorsque la partie de détermination d'état d'adsorption (S508) détermine que l'état d'adsorption du combustible au niveau de la partie d'adsorption (42b1) n'est pas l'état prédéterminé lorsque le nombre de calculs de la différence entre la première valeur de pression (P1) et la seconde valeur de pression (P2) atteint une valeur prédéterminée (N).

9. Système de pile à combustible selon l'une quelconque des revendications 1 à 8, dans lequel l'état prédéterminé est un état dans lequel un rapport entre une quantité d'adsorption du combustible au niveau de la partie d'adsorption (42b1) et une quantité d'adsorption saturée du combustible est égal à 80% ou plus.

10. Système de pile à combustible selon l'une quelconque des revendications 1 à 9, dans lequel le combustible est un gaz dont le composant majeur est un hydrocarbure qui comprend un nombre de carbones de 3 ou plus.
